# EUROPÄISCHE PATENTSCHRIFT

(11) **EP 2 406 581 B1**
(45) Veröffentlichungstag und Bekanntmachung des Hinweises auf die Patenterteilung: **14.06.2017**
(21) Anmeldenummer: 10709479.9
(22) Anmeldetag: 11.03.2010
(51) Int. Cl.: G01C 19/56, G01C 19/574

(54) **DOPPELAXIALER DREHRATENSENSOR**
BIAXIAL ROTATION RATE SENSOR
CAPTEUR DE VITESSE DE ROTATION BIAXIAL

(30) Priorität: 11.03.2009 DE 102009012269
(43) Veröffentlichungstag der Anmeldung: 18.01.2012
(73) Patentinhaber: Continental Teves AG & Co. oHG, 60488 Frankfurt (DE)
(72) Erfinder: SCHMID, Bernhard, 61169 Friedberg (DE); SIVARAMAN, Ramnath, 122001 Gurgaon (IN); GÜNTHNER, Stefan, 60489 Frankfurt (DE)
(86) Internationale Anmeldenummer: PCT/EP2010/053145
(87) Internationale Veröffentlichungsnummer: WO 2010/103093

(56) Entgegenhaltungen:
- WO-A1-03/058167
- DE-A1-102007 012 163
- DE-A1-102007 030 119
- US-A1- 2008 257 042
- US-A1- 2008 282 833
- KAWAI H ET AL: "HIGH-RESOLUTION MICROGYROSCOPE USING VIBRATORY MOTION ADJUSTMENT TECHNOLOGY" SENSORS AND ACTUATORS A, ELSEVIER SEQUOIA S.A., LAUSANNE, CH LNKD- DOI:10.1016/S0924-4247(01)00460-5, Bd. A90, Nr. 1/02, 1. Mai 2001 (2001-05-01), Seiten 153-159, XP001150256 ISSN: 0924-4247

## Beschreibung

Die Erfindung betrifft einen Drehratensensor gemäß Oberbegriff von Anspruch 1.

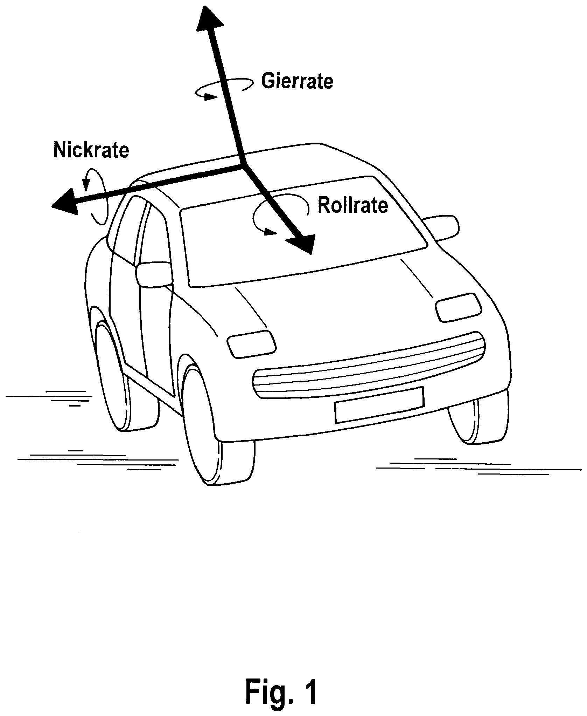

Beispielsweise bei Fahrstabilitätsregelungen (ESP) zur Kontrolle und Begrenzung von unerwünschten Gierbewegungen eines Kraftfahrzeuges um dessen Hochachse werden mit Hilfe von Sensoren wesentliche durch den Fahrer willentlich veränderbare Größen gemessen. Zu den vom Fahrer veränderbaren Größen gehören der Lenkwinkel, die Gaspedalstellung, der Bremsdruck, die Querbeschleunigung des Fahrzeuges sowie die Drehgeschwindigkeit der einzelnen Fahrzeugräder. Aus den gemessenen Größen wird eine Sollgierrate errechnet. Gleichzeitig wird mit einem Gierratensensor der Istwert der Gierrate gemessen, der sich als Reaktion auf das Fahrmanöver einstellt. Weicht der Istwert der Gierrate von dem berechneten Sollwert der Gierrate über ein vorbestimmtes, die Fahrstabilität gefährdendes Maß ab, wird durch gezielten Brems- und Motoreingriff die Gierbewegung des Fahrzeuges und damit die Istgierrate auf zulässige Werte begrenzt. Neben Fahrstabilitätsregelungen dienen Insassenschutzeinrichtungen dazu, die Sicherheit von Insassen in einem Kraftfahrzeug zu erhöhen. Bei einer erheblichen Anzahl von Unfällen ist lediglich ein Kraftfahrzeug beteiligt. Zu tödlichen Verletzungen kommt es bei dieser Art von Unfällen meistens dann, wenn sich das Kraftfahrzeug bei dem Unfall um seine Längsachse überschlägt. Insbesondere bei Cabriolets kann ein Fahrzeugüberschlag fatale Folgen haben. Aus diesem Grund sind für Cabriolets Insassenschutzeinrichtungen bekannt, die einen Überlebensraum für die Fahrzeuginsassen gewährleisten, damit diese bei einem Überschlag nicht mit dem Untergrund direkt in Berührung kommen. Ein Überrollbügel, der sich über den Köpfen der Fahrzeuginsassen erstreckt, erfüllt diesen Zweck. Allerdings wird bei Cabriolets der ästhetische Eindruck durch einen feststehenden Überrollbügel erheblich beeinträchtigt. Aus diesem Grund sind bei einigen Cabriolets Schutzeinrichtungen vorgesehen, die im Normalfall in den Fahrzeugsitzen oder hinter den Fahrzeugsitzen versteckt sind und erst im Falle eines drohenden Überschlages ausgefahren werden und dann ihre Schutzfunktion erfüllen. Die rechtzeitige Auslösung einer solchen Schutzeinrichtung setzt die rechtzeitige Erkennung eines drohenden Überrollvorganges voraus.
In Abstandsregelsystemen wird beispielsweise zudem die Nickrate zur Ausrichtung der Messstrahlung (Radar, Infrarot o. ä.), oder auch zur Steuerung von Beleuchtungssystemen verwendet. Eine Definition der Gier-, Roll- und Nickrate ist in Fig. 1 gegeben. Bezogen auf die Ebene, in der die Räder des Fahrzeuges liegen entspricht die Gierachse der z-Richtung dieser Ebene in kartesischen Koordinaten.

Die DE 10 2007 012 163 A1 offenbart einen zweiachsigen Drehratensensor mit zwei seismischen Massenpaaren und einem zentral angeordneten Kopplungsbalken Die Erfindung hat sich die Aufgabe gestellt, einen Drehratensensor vorzuschlagen, welcher eine präzisere und/oder robustere Erfassung von Drehraten um zwei sensitive Achsen ermöglicht und/oder eine relativ kompakte Ausbildung des Drehratensensors.
Diese Aufgabe wird erfindungsgemäß gelöst durch den mikromechanischen Drehratensensor gemäß Anspruch 1.

Die Grundfläche des Substrats des Drehratensensors ist vorzugsweise parallel zur x-y-Ebene eines kartesischen Koordinatensystems ausgerichtet. Die erste und zweite sensitive Achse sind insbesondere im Wesentlichen rechtwinklig zueinander angeordnet.

Die Antriebsrichtung der ersten und zweiten seismischen Masse ist bevorzugt im Wesentlichen rechtwinklig sowohl zur ersten, als auch zur zweiten sensitiven Achse.

Die wenigstens eine Aktoreinheit weist vorzugsweise wenigstens eine Elektrodenstruktur oder eine Kammstruktur auf, und ist so ausgelegt und kann so angesteuert werden, dass zwischen der Elektrodenstruktur oder Kammstruktur der Aktoreinheit und der dieser zugeordneten seismischen Masse bzw. dem Teil der Elektrodenstruktur - oder der Kammstruktur der seismischen Masse, eine elektrische Aktorspannung anliegt, welche eine elektrische Kraft bedingt bzw. hervorruft, mit der das Auslenkungsverhalten der seismischen Masse beeinflussbar ist.

Der Drehratensensor weist bevorzugt zumindest eine als Quadraturtrimmungs-Aktoreinheit ausgebildete Aktoreinheit auf und wenigstens eine Quadraturtrimmungs-Kontrolleinheit, welche zumindest eine elektronische Aktorspannung so einstellt, dass parasitäre Schwingungsanteile zumindest der ersten und zweiten seismischen Masse und/oder ein Quadratursignal unterdrückt werden.

Es ist bevorzugt, dass der Drehratensensor zumindest eine als Rückstellungs-Aktoreinheit ausgebildete Aktoreinheit aufweist und der Drehratensensor eine Rückstellungs-Kontrolleinheit aufweist, welche zumindest eine elektrische Aktorspannung so einstellt, dass die Ausleseauslenkungen und/oder Ausleseschwingungen bezogen auf die erste und/oder zweite sensitive Achse des Drehratensensors zurückgestellt werden, insbesondere ständig.

Es ist zweckmäßig, dass der Drehratensensor zumindest eine als kombinierte Quadraturtrimmungs-Rückstellungs-Aktoreinheit ausgebildete Aktoreinheit aufweist und der Drehratensensor eine Quadraturtrimmungs-Rückstellungs-Kontrolleinheit aufweist, welche zumindest eine elektrische Aktorspannung so einstellt, dass die Ausleseauslenkungen und/oder Ausleseschwingungen bezogen auf die erste und/oder zweite sensitive Achse des Drehratensensors zurückgestellt werden, insbesondere ständig, und dass parasitäre Schwingungsanteile zumindest der ersten und zweiten seismischen Masse und/oder ein Quadratursignal unterdrückt werden. Die Quadraturtrimmungs-Rückstellungs-Kontrolleinheit ist besonders bevorzugt so ausgebildet, das sie einen Gleichspannungsanteil zur Quadratur-Trimmung sowie einen Wechselspannungsanteil zur Rückstellung als Aktorspannung einstellt bzw. einregelt.

Es ist bevorzugt, dass der Drehratensensor bezüglich der Auslenkung der ersten und zweiten seismischen Masse jeweils zumindest eine erste, eine zweite und eine dritte Oszillatorkonfiguration umfasst,
wobei die erste Oszillatorkonfiguration wenigstens eine Antriebseinheit aufweist, welche dieser ersten Oszillatorkonfiguration eine Antriebsschwingung aufprägt, die Auslenkungen der seismischen Masse in Richtung einer ersten Achse umfasst, wobei die erste Oszillatorkonfiguration eine definierte Antriebsresonanzfrequenz bzw. Antriebsfrequenz aufweist,
die zweite Oszillatorkonfiguration definiert sich im Wesentlichen über die Auslenkungen der seismischen Masse in Richtung einer zweiten Achse in Form einer ersten Ausleseschwingung, welche durch die Einwirkung und/oder Erfassung einer Drehrate um die erste sensitive Achse hervorgerufen wird, wobei die zweite Oszillatorkonfiguration eine definierte erste Ausleseresonanzfrequenz aufweist,
die dritte Oszillatorkonfiguration definiert sich im Wesentlichen über die Auslenkung der seismischen Masse in Richtung einer dritten Achse in Form einer zweiten Ausleseschwingung, welche durch die Einwirkung und/oder Erfassung einer Drehrate um die zweite sensitive Achse hervorgerufen wird, wobei die dritte Oszillatorkonfiguration eine definierte zweite Ausleseresonanzfrequenz aufweist.

Der Drehratensensor umfasst vorzugsweise wenigstens eine Antriebseinheit zum Antrieb zumindest der ersten und zweiten seismischen Masse hinsichtlich der Antriebsschwingung, wobei diese Antriebseinheit so ausgelegt ist, dass sie die erste und zweite seismische Masse gegenphasig, also um im Wesentlichen 180° zueinander phasenverschoben, bezüglich der Antriebsschwingung antreibt. Hierdurch bleibt der Schwerpunkt des gesamten Drehratensensors bezogen auf die Antriebsschwingung im Wesentlichen in Ruhe.

Die wenigstens eine Antriebseinheit umfasst bevorzugt eine Antriebs-Kontrolleinheit sowie eine Antriebsdetektionseinheit, welche die Auslenkung der zugeordneten wenigstens einen seismischen Masse erfasst und diese Information insbesondere der Antriebs-Kontrolleinheit zur Verfügung stellt. Es ist bevorzugt, dass der Drehratensensor zumindest eine als Resonanzfrequenzverschiebungs-Aktoreinheit ausgebildete Aktoreinheit aufweist und der Drehratensensor eine Resonanzfrequenzverschiebungs-Kontrolleinheit aufweist, welche zumindest eine elektrische Aktorspannung so einstellt, dass die Antriebsresonanzfrequenz und/oder die erste Ausleseresonanzfrequenz und/oder die zweite Resonanzfrequenz, der entsprechenden Oszillatorkonfiguration/en um einen definierten Wert verändert werden und/oder auf einen definierten Wert eingestellt werden.
Der Drehratensensor weist vorzugsweise pro seismischer Masse eine dieser seismischen Masse zugeordnete Resonanzfrequenzverschiebungs-Aktoreinheit und/oder Quadraturtrimmungs-Aktoreinheit und/oder Rückstellungs-Aktoreinheit und/oder kombinierte Quadraturtrimmungs-Rückstellungs-Aktoreinheit auf.

Die wenigstens eine Elektrodenstruktur weist bevorzugt, insbesondere jeweils, zumindest eine Elektrode auf, welche besonders bevorzugt als Kondensatorplatte ausgebildet ist, die im Wesentlichen parallel zur Grundfläche des Substrats des Drehratensensors ausgebildet ist.
Die wenigsten eine Kammstruktur weist vorzugsweise, insbesondere jeweils, Kammrücken und Zinken auf, die in das Substrat hineingebildet sind bzw. deren Kammrücken- Zinkengeometrie zumindest in der Substratebene ausgebildet ist. Die Zinken der Kammstruktur, bzw. deren jeweiligen Zinkenseitenaußenfläche/n, bilden besonders bevorzugt Elektroden aus, deren Normalen senkrecht zur Normalen der Substratebene ausgerichtet sind.

Zumindest die erste und zweite seismische Masse, sowie insbesondere weitere Einheiten des Drehratensensors, sind vorzugsweise mittels Federelementen mit dem Substrat und/oder miteinander verbunden, welche u-förmig oder v-förmig oder s-förmig ausgebildet sind. Diese Federelemente weisen insbesondere jeweils zwei im Wesentlichen zueinander im unausgelenkten Zustand parallel ausgerichtete Federbalkenelemente auf, welche besonders bevorzugt in Richtung dieser Federbalkenelemente relativ zueinander ausgelenkt werden können.

Eine Quadraturtrimmungs- und/oder Rückstellungs- und/oder Frequenzverschiebungs- und/oder Antriebs- Kontrolleinheit umfasst bevorzugt eine Energieversorgungseinheit zur Bereitstellung elektrischer Energie bzw. elektrischer Spannung an der wenigstens einen zugeordneten Kammstruktur und/oder Elektrodenstruktur sowie insbesondere eine elektronische Kontrolleinheit, welche diese elektrische Spannung gemäß eines definierten Einstellungs- und/oder Regelungsalgorithmus bereitstellt und den jeweils bereitzustellenden elektrischen Spannungswert berechnet und/oder einregelt.

Es ist bevorzugt, dass die zweite und die dritte Oszillatorkonfiguration so ausgebildet sind und/oder betrieben werden, dass die Differenz der ersten Ausleseresonanzfrequenz minus der Antriebsresonanzfrequenz und die Differenz der zweiten Ausleseresonanzfrequenz minus der Antriebsresonanzfrequenz beide größer als null oder beide kleiner als null sind, wobei insbesondere der Betrag, der Differenz der ersten Ausleseresonanzfrequenz minus der zweiten Ausleseresonanzfrequenz, größer als 0,1 Hz, insbesondere größer als 1 Hz, besonders bevorzugt größer als 10 Hz, ganz besonders bevorzugt größer als 50Hz, ist.

Es ist zweckmäßig, dass die zweite und die dritte Oszillatorkonfiguration so ausgebildet sind und/oder betrieben werden, dass die Differenz der ersten Ausleseresonanzfrequenz minus der Antriebsresonanzfrequenz größer als null ist und die Differenz der zweiten Ausleseresonanzfrequenz minus der Antriebsresonanzfrequenz kleiner als null ist oder umgekehrt, wobei insbesondere der Betrag, der Differenz der ersten Ausleseresonanzfrequenz minus der zweiten Ausleseresonanzfrequenz, größer als 0,1 Hz, insbesondere größer als 1 Hz, besonders bevorzugt größer als 10 Hz, ganz besonders bevorzugt größer als 50Hz, ist.

Es ist bevorzugt, dass die zweite und die dritte Oszillatorkonfiguration so ausgebildet sind und/oder betrieben werden, dass die Differenz der ersten Ausleseresonanzfrequenz minus der Antriebsresonanzfrequenz im Wesentlichen gleich null ist oder die Differenz der zweiten Ausleseresonanzfrequenz minus der Antriebsresonanzfrequenz im Wesentlichen gleich null ist oder dass die Differenz der ersten Ausleseresonanzfrequenz minus der Antriebsresonanzfrequenz und die Differenz der zweiten Ausleseresonanzfrequenz minus der Antriebsresonanzfrequenz jeweils im Wesentlichen gleich null sind.

Darunter, dass die Differenz einer Ausleseresonanzfrequenz minus der Antriebsresonanzfrequenz im Wesentlichen gleich null ist, wird vorzugsweise verstanden, dass diese Differenz kleiner als 10 Hz ist, insbesondere kleiner als 1 Hz, besonders bevorzugt kleiner als 0,1 Hz.

Der Abstand der ersten und zweiten Ausleseresonanzfrequenz zueinander, also der Betrag der Differenz der zweiten Ausleseresonanzfrequenz minus der ersten Ausleseresonanzfrequenz ist vorzugsweise relativ groß gewählt, um ein Übersprechen zwischen den beiden Ausleseschwingungen zu vermeiden und möglichst insensitiv gegenüber äußeren Störungen zu sein, hinsichtlich von Störgrößen mit Frequenzen im Bereich dieser Differenzfrequenz, so dass der Betrag dieser Differenz insbesondere größer als 0,1 Hz ist, besonders bevorzugt größer als 1 Hz, ganz besonders bevorzugt größer als 10 Hz und insbesondere ganz besonders bevorzugt größer als 50 Hz.

Es ist bevorzugt, dass der Drehratensensor bezogen zumindest auf die erste, insbesondere jede, seismische Masse zumindest eine Antriebseinheit und wenigstens eine erste und eine zweite Detektionseinheit umfasst, wobei diese Antriebseinheit und/oder die erste und/oder die zweite Detektionseinheit mit der seismischen Masse über wenigstens ein Federelement verbunden sind und insbesondere nicht mit der seismischen Masse starr gekoppelt sind.

Alternativ vorzugsweise ist die erste und oder zweite seismische Masse mit der ihr zugeordneten Antriebseinheit und/oder der ersten und/oder zweiten ihr zugeordneten Detektionseinheit zumindest teilweise im Wesentlichen starr gekoppelt.

Es ist zweckmäßig, dass die erste und zweite seismische Masse jeweils mit der ihr zugeordneten Antriebseinheit und der ersten sowie der zweiten ihr zugeordneten Detektionseinheit zumindest teilweise starr verbunden bzw. gekoppelt sind.
Es ist bevorzugt, dass die erste und zweite seismische Masse jeweils eine Basismasse umfassen und wenigstens eine zusätzliche drehratensensitive Teilmasse, wobei insbesondere die Basismasse Teil der zweiten Oszillatorkonfiguration ist und bei Einwirkung einer Drehrate um die erste sensitive Achse zur ersten Ausleseschwingung angeregt wird, wobei die zusätzliche drehratensensitive Teilmasse dabei insbesondere mitschwingt, aber nicht in Richtung der dritten Achse angeregt wird, wobei diese Teilmasse Teil der dritten Oszillatorkonfiguration ist und bei Einwirkung einer Drehrate um die zweite sensitive Achse zur zweiten Ausleseschwingung angeregt wird, welcher die jeweilige Basismasse nicht folgt. Die drehratensensitive Teilmasse ist mittels eines Federelements mit der Basismasse gekoppelt, wobei diese Federkopplung, insbesondere ausschließlich, im Wesentlichen starr in Antriebsrichtung ausgebildet ist. Die jeweilige Basismasse ist jeweils mit der ihr zugeordneten Antriebseinheit, sowie mit der ihr zugeordneten ersten Detektionseinheit, zumindest teilweise starr verbunden. Die drehratensensitive Teilmasse ist hingegen lediglich mit der ihr zugeordneten zweiten Detektionseinheit zumindest teilweise starr verbunden und von der Antriebseinheit sowie der ersten Detektionseinheit über das wenigstens eine Federelement zwischen Basismasse und Teilmasse zumindest teilweise entkoppelt.

Die zusätzliche drehratensensitive Teilmasse ist mittels eines Federelements mit der Antriebseinheit gekoppelt, wobei diese Federkopplung, insbesondere ausschließlich, im Wesentlichen starr in Antriebsrichtung ausgebildet ist. Die Basismasse ist ebenfalls mit einem zusätzlichen Federelement im Wesentlichen starr in Abtriebsrichtung, insbesondere ausschließlich in Antriebsrichtung, mit der Antriebseinheit gekoppelt. Die jeweilige Basismasse ist mit der ihr zugeordneten ersten Detektionseinheit über ein zusätzliches Federelement so gekoppelt, dass diese Detektionseinheit insbesondere im Wesentlichen nur in Richtung der zweiten Achse auslenkbar ist, also im Rahmen einer ersten Ausleseschwingung. Die drehratensensitive Teilmasse ist hingegen mit der ihr zugeordneten zweiten Detektionseinheit zumindest teilweise starr verbunden, insbesondere ausschließlich und ist mit den anderen Einheiten nur über Federelemente gekoppelt.
Dabei umfasst jede dieser obigen Einheiten vorzugsweise einen Teil, der mit der entsprechenden seismischen Masse gekoppelt bzw. starr verbunden ist sowie einen Teil, der dazu berührungslos ist und insbesondere mit dem Substrat gekoppelt und/oder starr verbunden ist.
Die Antriebseinheit und/oder die erste und/oder die zweite Detektionseinheit sind zweckmäßigerweise zumindest teilweise Teil der ersten und/oder zweiten seismischen Masse bezüglich der ersten und/oder zweiten und/oder dritten Oszillatorkonfiguration.
Es ist bevorzugt, dass die erste und die zweite seismische Masse jeweils mindestens eine erste drehratensensitive Teilmasse aufweisen, welche durch zumindest ein Federelement, insbesondere durch wenigstens ein Torsionsfederelement, mit wenigstens einer anderen Teileinheit der jeweiligen seismischen Masse verbunden ist, wobei diese erste drehratensensitive Teilmasse so ausgebildet und ausgelegt sind, dass sie entweder Teil der zweiten oder der dritten Oszillatorkonfiguration ist.
Es ist zweckmäßig, dass der Drehratensensor wenigstens einen ersten Kopplungsbalken aufweist, welcher so ausgebildet und angeordnet ist, dass er die Auslenkungen der ersten und zweiten seismischen Masse bezüglich der ersten Ausleseschwingung innerhalb der zweiten Oszillatorkonfiguration koppelt, und dass der Drehratensensor zusätzlich zumindest einen zweiten, insbesondere einen zweiten und einen dritten, Kopplungsbalken aufweist, welche/r so ausgebildet und angeordnet ist/sind, dass er/sie die Auslenkungen der ersten und zweiten seismische Masse bezüglich der zweiten Ausleseschwingung innerhalb der dritten Oszillatorkonfiguration koppelt.

Der zumindest eine Kopplungsbalken ist vorzugsweise an zumindest einem Federelement, insbesondere einem Torsionsfederelement, aufgehängt. Dabei ist dieses wenigstens eine Federelement besonders bevorzugt am Substrat eingespannt und bildet mit diesem einen Ankerpunkt. Es ist zweckmäßig, dass wenigstens dieses eine Federelement so ausgebildet und eingespannt bzw. befestigt ist, dass es translatorische Auslenkungen des Kopplungsbalkens verhindert.

Der wenigstens eine Kopplungsbalken ist bevorzugt im Wesentlichen im Bereich seines Schwerpunkts an dem zumindest einen Federelement aufgehängt.

Der zumindest eine Kopplungsbalken ist zweckmäßigerweise an seinen Enden jeweils mittels Federelementen mit den seismischen Massen verbunden bzw. gekoppelt - insbesondere an seinem ersten Ende mit der ersten seismischen Masse und an seinem zweiten Ende mit der zweiten seismischen Masse.

Der wenigstens eine Kopplungsbalken ist vorzugsweise so ausgelegt und angeordnet, dass er unerwünschte Schwingungen und Auslenkungen, insbesondere gemeinsame, besonders bevorzugt gleichphasige bzw. gleichgerichtete und gleichorientierte, translatorische Auslenkungen der ersten und zweiten seismischen Masse, hinsichtlich der ersten und/oder zweiten Ausleseschwingung unterdrückt.

Es ist bevorzugt, dass wenigstens eine Quadraturtrimmungs-Aktoreinheit zumindest eine als Quadraturtrimmungs-Kammstruktur ausgebildete Kammstruktur aufweist, die mindestens ein Kammstrukturbasiselementenpaar umfasst, welches zumindest aus einem ersten und einem zweiten Kammstrukturbasiselement besteht, welche jeweils einen ersten und einen zweiten Kammrücken sowie damit jeweils einstückig verbundene ein oder zwei oder mehr Zinken umfassen, wobei die Zinken dieses ersten und zweiten Kammrückens berührungslos, insbesondere alternierend, ineinandergreifen, wobei das zweite Kammstrukturbasiselement im Vergleich zum ersten Kammstrukturbasiselement im Wesentlichen so ausgebildet und angeordnet ist, dass bezüglich der geometrischen Betrachtung ausgehend vom ersten Kammstrukturbasiselement dieses zweite Kammstrukturbasiselement bezogen auf eine Normale der Substratoberfläche um 180° gedreht ist und insbesondere innerhalb der Substratebene translatorisch verschoben ist.

Der geometrische Zusammenhang zwischen dem ersten und dem zweiten Kammstrukturbasiselement eines Kammstrukturbasiselementenpaares der Quadraturtrimmungs-Kammstruktur ist also zweckmäßigerweise im Wesentlichen definiert als eine Punktspiegelung an bzw. um einem definierten Punkt in der Substratebene und optional als eine zusätzliche translatorische Verschiebung in der Substratebene.

Es ist zweckmäßig, dass sämtliche erste, insbesondere einstückig verbundene, Kammrücken starr mit dem Substrat verbunden sind bzw. Teil des Substrats sind und dass sämtliche erste Kammrücken im Wesentlichen mit dem gleichen elektrischen Potential verbunden sind.

Es ist bevorzugt, dass sämtliche zweite, insbesondere einstückig verbundene, Kammrücken starr, insbesondere einstückig, mit einer der seismischen Massen verbunden sind bzw. Teil dieser seismischen Masse sind und dass sämtliche zweite Kammrücken im Wesentlichen mit dem gleichen elektrischen Potential verbunden sind.

Bevorzugt sind jeweils sämtliche erste Kammrücken und jeweils sämtliche zweite Kammrücken miteinander einstückig verbunden und bilden einen gemeinsamen ersten Kammrücken und einen gemeinsamen zweiten Kammrücken.

Vorzugsweise ist die Quadraturtrimmungs-Kontrolleinheit gemeinsam mit den ersten Kammrücken bzw. dem ersten gemeinsamen Kammrücken und jeweils gemeinsam mit den zweiten Kammrücken bzw. dem zweiten gemeinsamen Kammrücken elektrisch leitend verbunden und legt an diese die Aktorspannung an bzw. stellt die Aktorspannung an diesen ein.

Die Kammstruktur der Quadraturtrimmungs-Aktoreinheit umfasst bevorzugt eine definierte Anzahl an Kammstrukturbasiselementen, bei denen jeweils die ersten Kammrücken und die zweiten Kammrücken einstückig miteinander verbunden sind.

Die Quadraturtrimmungs-Aktoreinheit weist bevorzugt mehrere solcher oben beschriebener, voneinander räumlich getrennt angeordnete Kammstrukturen auf.

Die Zinken sind vorzugsweise im Wesentlichen rechtwinkelig an dem jeweiligen Kammrücken befestigt.

Es ist zweckmäßig, dass die beiden Kammrücken des ersten und zweiten Kammstrukturbasiselements im Wesentlichen parallel zueinander angeordnet sind.

Bevorzugt genügt das alternierende Ineinandergreifen dem schematischen Muster einer berührungslosen Verzahnung.

Es ist zweckmäßig, dass wenigstens eine kombinierte Quadraturtrimmungs-Rückstellungs-Aktoreinheit eine kombinierte Kammstruktur umfasst, die eine Quadraturtrimmungs-Kammstruktur umfasst,
welche mindestens ein Kammstrukturbasiselementenpaar umfasst, welches zumindest aus einem ersten und einem zweiten Kammstrukturbasiselement besteht, welche jeweils einen ersten und einen zweiten Kammrücken sowie damit jeweils einstückig verbundene ein oder zwei oder mehr Zinken umfassen, wobei die Zinken dieses ersten und zweiten Kammrückens berührungslos, insbesondere alternierend, ineinandergreifen, wobei das zweite Kammstrukturbasiselement im Vergleich zum ersten Kammstrukturbasiselement im Wesentlichen so ausgebildet und angeordnet ist, dass bezüglich der geometrischen Betrachtung ausgehend vom ersten Kammstrukturbasiselement dieses zweite Kammstrukturbasiselement bezogen auf eine Normale der Substratoberfläche um 180° gedreht ist und insbesondere innerhalb der Substratebene translatorisch verschoben ist, wobei die kombinierte Kammstruktur zusätzlich eine als Rückstellungs-Kammstruktur ausgelegte Kammstruktur aufweist, wobei diese Rückstellungs-Kammstruktur mindestens ein Kammstrukturbasiselementenpaar umfasst, welches zumindest aus einem ersten und einem zweiten Kammstrukturbasiselement besteht, welche jeweils einen ersten und einen zweiten Kammrücken sowie damit jeweils einstückig verbundene ein oder zwei oder mehr Zinken umfassen, wobei die Zinken dieses ersten und zweiten Kammrückens berührungslos, insbesondere alternierend, ineinandergreifen, wobei das zweite Kammstrukturbasiselement im Vergleich zum ersten Kammstrukturbasiselement im Wesentlichen so ausgebildet und angeordnet ist, dass bezüglich der geometrischen Betrachtung ausgehend vom ersten Kammstrukturbasiselement dieses zweite Kammstrukturbasiselement an einer Geraden, parallel zu wenigstens einem der ersten oder zweiten Kammrücken gespiegelt ist und insbesondere innerhalb der Substratebene translatorisch verschoben ist.

Die Kammstrukturbasiselemente der Quadraturtrimmungs-Kammstruktur und/oder der Rückstellungs-Kammstruktur sind vorzugsweise, insbesondere jeweils und sämtlich, so ausgebildet dass die Zinken des ersten Kammrückens jeweils in gleicher Weise in die Zinkenlücken bzw. zwischen die Zinken des zweiten Kammrückens eingreifen, wobei dieser jeweilige Eingriff des jeweiligen mindestens einen Zinkens des ersten Kammrückens in die jeweilige Zinkenlücke des zweiten Kammrückens nicht mittig bzw. nicht zentrisch bei einem unausgelenkten Zustand bzw. einem Ruhezustand erfolgt. Der jeweilige erste und zweite Kammrücken mit ihren Zinken sind entsprechend ausgebildet und angeordnet. Zweckmäßigerweise ist jeweils der Abstand der Zinken des ersten Kammrückens, die in eine Zinkenlücke des zweiten Kammrückens eingreifen, zu den begrenzenden Zinken des zweiten Kammrückens dieser Zinkenlücke für sämtliche Zinken- zu - Zinkenlückeneingriffe dieser beiden Kammrücken gleich. Der wenigstens eine Zinken des ersten Kammrückens, der jeweils in eine Zinkenlücke des zweiten Kammrückens eingreift ist dabei besonders bevorzugt jeweils bezogen auf einen unausgelenkten Zustand bzw. einen Ruhezustand nicht mittig bezüglich seines Abstands zu den beiden begrenzenden Zinken des zweiten Kammrückens dieser Zinkenlücke ausgerichtet.

Es ist bevorzugt, dass jeweils die ersten Kammrücken der Quadraturtrimmungs-Kammstruktur und der Rückstellungs-Kammstruktur und jeweils die zweiten Kammrücken der Quadraturtrimmungs-Kammstruktur und der Rückstellungs-Kammstruktur einstückig ausgebildet sind, und damit insbesondere einen gemeinsamen ersten und gemeinsamen zweiten Kammrücken bilden, und/oder mit demselben elektrischen Potential verbunden sind.

Der erste gemeinsame Kammrücken ist vorzugsweise als gemeinsamer Kammrücken mit beidseitig nach außen abragenden Zinken ausgebildet oder umfasst zwei erste gemeinsame, voneinander beabstandete Kammrücken mit einander zugewandten bzw. nach innen abragenden Zinken. Der erste gemeinsame Kammrücken ist insbesondere starr mit dem Substrat des Drehratensensors verbunden.

Der zweite gemeinsame Kammrücken ist bevorzugt als Rahmen, mit nach innen ragenden Zinken, insbesondere ausgehend von zwei gegenüberliegenden Seiten des Rahmens, ausgebildet oder als gemeinsamer Kammrücken mit beidseitig nach außen abragenden Zinken ausgebildet. Der zweite gemeinsame Kammrücken ist insbesondere beweglich gegenüber dem Substrat ausgebildet, und ist besonders bevorzugt zumindest teilweise starr mit der ersten und/oder zweiten seismischen Masse verbunden.
Unter einem solchen Rahmen wird vorzugsweise eine Rahmengeometrie mit rechteckiger Außen- und Innengrundfläche verstanden.
Vorzugsweise ist die Quadraturtrimmungs-Rückstellungs-Kontrolleinheit mit der jeweils gemeinsam mit den ersten Kammrücken bzw. dem ersten gemeinsamen Kammrücken und jeweils gemeinsam mit den zweiten Kammrücken bzw. dem zweiten gemeinsamen Kammrücken elektrisch leitend verbunden und legt an diese die Aktorspannung an bzw. stellt die Aktorspannung an diesen ein, gemeinsam zur Trimmung der Quadratur bzw. zur Unterdrückung von Quadratursignalen und zur Rückstellung der Ausleseauslenkungen bzw. Ausleseschwingungen. Der erfindungsgemäße Drehratensensor wird vorzugsweise in einem Sensor- und/oder Fahrdynamikregelungssystem eines Kraftfahrzeug verwendet, wobei mittels eines oder mehrerer der erfindungsgemäßen Drehratensensoren die Gierrate und Rollrate oder Gierrate und Nickrate oder Rollrate und Nickrate oder Gierrate und Rollrate und Nickrate des Kraftfahrzeugs erfasst wird. Diese Informationen dienen zur Erfassung und Kontrolle von fahrdynamischen Situationen in ESP-, Insassenschutz- und Komfortregelungssystemen.

Weitere bevorzugte Ausführungsformen ergeben sich aus den Unteransprüchen und den nachfolgenden Beschreibungen von Ausführungsbeispielen an Hand von Figuren.

Fig. 1 bis 33 zeigen schematische Beispiele bzw. Ausführungsbeispiele.

Der Drehratensensor basiert bevorzugt auf dem Prinzip eines vibrierenden mikromechanischen Drehratensensors, der aus einem System von Federelementen und Massen besteht. Den Kern bildet ein monolithisches Drehratensensorelement, mit einem Bewegungsfreiheitsgrad A. Dabei regt eine Antriebseinheit (AE) Teile der Sensorstruktur oder die gesamte Struktur (seismische Masse: SM) zum Schwingen entlang dieses Freiheitsgrades an. Die Resonanzfrequenz entlang des Freiheitsgrades A bzw. der erstem Achse, liegt bei fA. Ferner existieren zwei weitere Bewegungsfreiheitsgrade (S1 und S2) bzw. eine zweite und dritte Achse, in deren Richtung Teile der Struktur oder die gesamte Struktur ausgelenkt werden können, wenn der Drehratensensor sich um Achsen orthogonal zu A, insbesondere in Richtung von S1 und S2, dreht. Die Bewegungsfreiheitsgrade S1 und S2 sind besonders bevorzugt im Wesentlichen orthogonal zueinander und orthogonal zur Antriebsrichtung A des Antriebs. A, S1 und S2 bilden somit ein kartesisches Koordinatensystem (x, y und z). Die Resonanzfrequenzen entlang der Freiheitsgrade S1 und S2 liegen bei fS1 und fS2.

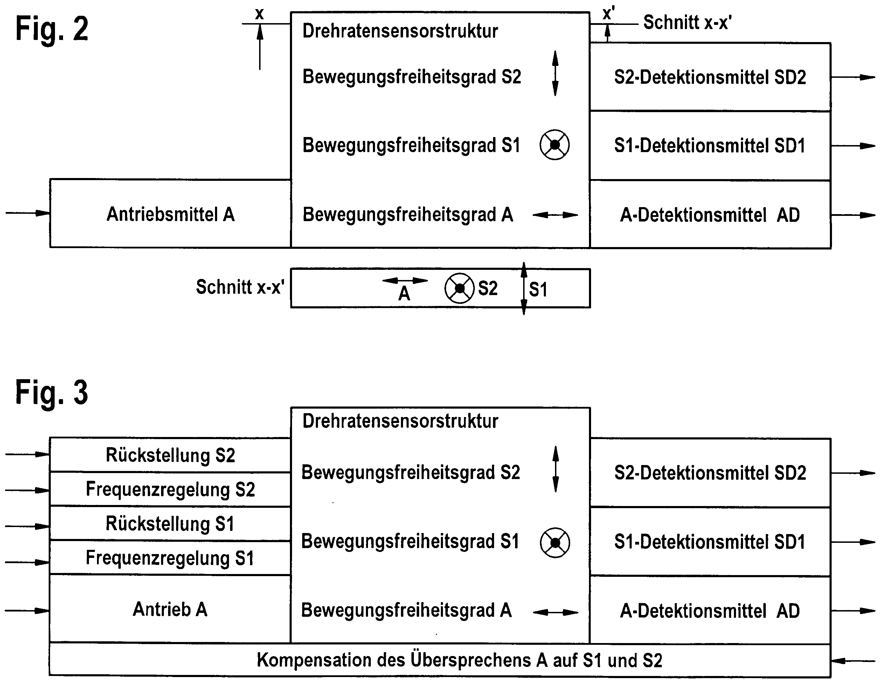

Bevorzugt weist der Drehratensensor Detektionseinheiten SD1, SD2 auf, um Auslenkungen der seismischen Massen in Antriebsrichtung A des Antriebs AD und/oder in Detektionsrichtungen S1, S2 zu überwachen. Bewegungen entlang dieser Bewegungsfreiheitsgrade werden durch diese Detektionsmittel in elektrisch messbare Größen gewandelt, wie anhand der Fig. 2 veranschaulicht.

Ferner weist der Drehratensensor vorzugsweise Mittel auf, wie beispielsweise Resonanzfrequenzverschiebungs-Aktoreinheiten und/oder Quadraturtrimmungs-Aktoreinheiten, um das Übersprechen von A auf S1 bzw. S2 zu unterdrücken und die natürlichen Resonanzfrequenzen der Bewegungsfreiheitsgrade der Sensorstruktur in Richtung S1 und S2 einzustellen. Mit diesen Mitteln lassen sich fertigungsbedingte Abweichungen von der Idealstruktur kompensieren. Weiter existieren Mittel, beispielsweise Rückstellungs-Aktoreinheiten, mithilfe derer Detektionsbewegungen der Sensorstruktur entlang S1 und S2 aktiv unterdrückt werden können, so dass die Stärke der Rückstellkraft das Maß für die Drehrate darstellt, wobei diese Zusammenhänge in Fig. 3 veranschaulicht sind.

Wird nun beispielsweise der Drehratensensor entlang der Antriebsrichtung A zum Schwingen angeregt und um S1 gedreht, wirkt auf die bewegte Masse der Struktur eine Coriolis-Kraft längs S2, d. h. S1 ist die 1. sensitive Messachse des Drehratensensorelements. Die Coriolis-Kraft verursacht eine Bewegung von Teilen der Sensorstruktur oder der gesamten Sensorstruktur entlang S2, welche mit SD2 in eine zur Coriolis-Kraft proportionale elektrisch messbare Größe gewandelt wird. Wird der Drehratensensor beispielhaft um S2 gedreht, so wirkt auf Ihn eine Coriolis-Kraft längs S1, d. h. S2 ist die 2. sensitive Achse des Drehratensensorelements. Dies verursacht eine Bewegung von Teilen der Sensorstruktur oder der gesamten Sensorstruktur entlang S1, welche mit SD1 in eine zur Coriolis-Kraft proportionale elektrisch messbare Größe gewandelt wird. Die auftretende Corioliskraft ist dabei im Wesentlichen proportional zur externen Drehrate und zur Amplitude der seismischen Masse. Deswegen regt die Antriebseinheit die seismische Masse bevorzugt in ihrer Resonanzfrequenz fA an, so dass mit geringer Antriebsleistung durch die mechanische Verstärkung (Güte des Oszillators) eine maximale Schwingungsamplitude erreicht wird. Bei einwirkender Corioliskraft wird eine Kraftkomponente in Richtung S1 oder S2 in dieser Antriebsfrequenz erzeugt. Im Folgenden werden unterschiedliche, beispielhafte Abfolgen von Resonanzfrequenzen dargestellt, die eine Messung von Drehraten um S1 und S2 gewährleisten. Wichtig ist dabei die relative Lage der Resonanzfrequenzen, beschrieben durch die Frequenzunterschiede ΔfS1= fS1 - fA und ΔfS2= fS2 - fA. Dabei ist fS1 die erste Ausleseresonanzfrequenz, fS2 die zweite Ausleseresonanzfrequenz und fA die Antriebsresonanzfrequenz.

Um ein sich gegenseitiges Aufschwingen von Antrieb und Detektion bei äußeren Störungen zu vermeiden, ist die Resonanzfrequenz von S1 und S2 bevorzugt ungleich der Resonanz des Antriebs A. Dieser Frequenzabstand zu A geht daher in die Empfindlichkeit von SD1 und SD2 ein, je näher diese zusammen liegen, desto höher ist die mechanische Verstärkung durch die Resonanzüberhöhung. Desto höher ist allerdings auch die Sensitivität des Systems auf äußere (niederfrequente) Störungen des Sensors und der Ausleseelektronik. Zusätzlich ist bei kleinen Frequenzunterschieden ΔfS1 und ΔfS2 die relative Änderung der Drehratenverstärkung größer, wenn sich durch äußere Einflüsse der Absolutbetrag der Frequenzdifferenzen ΔfS1 und ΔfS2 ändert.

Die beiden Detektionsfrequenzen bzw. die erste und die zweite Ausleseresonanzfrequenz werden insbesondere ferner so gewählt, dass der Abstand |fS2 - fS1| möglichst groß ist, um eventuelle (niederfrequente) Störungen des Sensors und der Ausleseelektronik in der Nähe der Frequenz |fS2 - fS1| zu vermeiden. Beim Einstellen der Detektionsfrequenzen ist also ein Kompromiss zu finden zwischen maximaler Drehratenverstärkung und geringer Störanfälligkeit.

Der modenseparierte Sensor besitzt im Vergleich zum modenangepassten Sensor insbesondere eine geringere Drehratenverstärkung, ist aber weniger sensitiv bzgl. von Umwelteinflüssen ausgebildet, und benötigt weniger Kompensationsmechanismen.

Bevorzugt weist der Drehratensensor eine Ausbildung auf, welche folgenden Zusammenhängen genügt: ΔfS1, ΔfS2 > 0 oder ΔfS1, ΔfS2 < 0. In diesem Fall sind beide Detektionsfrequenzen ober- oder unterhalb der Antriebsfrequenz.

Alternativ vorzugsweise weist der Drehratensensor eine Ausbildung auf, welche folgenden Zusammenhängen genügt: ΔfS1> 0, ΔfS2< 0 oder ΔfS1< 0, ΔfS2> 0. In diesem Fall liegt eine Detektionsfrequenz bzw. Ausleseresonanzfrequenz ober- und die andere Detektionsfrequenz bzw. Ausleseresonanzfrequenz unterhalb der Antriebsfrequenz. Es ist hier einfacher, sowohl für die Detektionsrichtung S1 alleine als auch für die Detektionsrichtung S2 alleine einen Kompromiss für ΔfS1 und ΔfS2 hinsichtlich der Störanfälligkeit und maximalen Drehratenverstärkung zu finden. Die Differenzfrequenz |fS2 - fS1| wird dabei vorzugsweise wieder relativ groß gewählt um insensitiv gegenüber Störungen zu sein und ein Übersprechen zu vermeiden.

Zweckmäßigerweise weist der Drehratensensor eine zumindest teilweise Modenanpassung auf. Im Gegensatz zum modenseparierten Sensor, besteht die Möglichkeit, eine oder beide Detektionsfrequenzen auf die Antriebsfrequenz anzupassen. Die Verstärkung der Drehrate ist wegen der resonanten Anregung des Detektionsoszillators von der Güte des Detektionsoszillators, also von der Güte der zweiten oder dritten Oszillatorkonfiguration abhängig und, wenn der Detektionsoszillator nicht überdämpft ist, wesentlich höher als im modenseparierten Fall. Änderungen des Frequenzabstandes zwischen Antriebs- und Detektionsfrequenz ergeben allerdings möglicherweise abhängig von der Güte relativ große Änderungen der Drehratenverstärkung. Äußere Einflüsse, die die Güten und/oder die Lage der Frequenzen beeinflussen, haben möglicherweise relevante Auswirkungen auf die Drehratenverstärkung und müssen möglicherweise kompensiert werden. Dies kann z. B. im Design vorgesehen werden, indem geeignete Mittel, wie eine Resonanzfrequenzverschiebungs-Aktoreinheit, angebracht werden, mithilfe derer eine Resonanzfrequenz elektrisch nachgeführt werden kann. Außerdem können Vorrichtungen angebracht werden, mit denen die Güte elektronisch reguliert wird.

Da die Detektionsbewegung aufgrund der Modenanpassung zu sehr starken Schwingungen angeregt werden kann, ist es möglich, dass die Amplitude der Schwingung in den nichtlinearen Bereich der Federelemente des Detektionsoszillators oder in den nichtlinearen Bereich der Auslesemittel kommt. Daher kann es angebracht sein, Mittel zur Verfügung zu stellen, die die Detektionsbewegung beispielsweise rückstellen, beispielhaft mit einer Rückstellungs-Aktoreinheit, so dass die Rückstellkraft als Maß der Drehratenverstärkung genommen werden kann. Ein weiterer Effekt der Modenanpassung besteht in der Reduzierung der Bandbreite des Drehratensensors. Die Bandbreite ist dabei das Frequenzspektrum von externen Drehraten, für die die Verstärkung einer Drehrate mit der Amplitube Ω von der Verstärkung einer konstanten Drehrate Ωₖₒₙₛₜ um weniger als 3 dB abweicht. Während bei einem modenseparierten Sensor die Bandbreite in etwa dem halben Unterschied zwischen Antriebs- und Detektionsfrequenz entspricht, geht für den modenangepassten Sensor die Bandbreite mit zunehmender Güte gegen 0. Wiederum können Vorrichtungen angebracht werden, mit denen die Güte elektronisch reguliert wird.

Der modenangepasste Sensor besitzt im Vergleich zum modenseparierten Sensor eine größere Drehratenverstärkung.

Bevorzugt weist der Drehratensensor eine Ausbildung auf, welche folgenden Zusammenhängen genügt: ΔfS1 = 0 oder ΔfS2 = 0. In diesem Fall ist die Frequenz einer der beiden Detektionsoszillationen, also die erste oder die zweite Ausleseresonanzfrequenz, identisch mit der Antriebsfrequenz bzw. der Antriebsresonanzfrequenz, so dass die Detektion der Drehrate um die entsprechende Drehratenachse modenangepasst erfolgt. Die Detektion der Drehrate um die andere sensitive Achse erfolgt modensepariert. Je nach Anforderung an die Genauigkeit der entsprechenden Auslesevorrichtung kann die Drehratenverstärkung um eine sensitive Achse besonders genau bestimmt werden.

Zweckmäßigerweise weist der Drehratensensor eine Ausbildung auf, welche folgenden Zusammenhängen genügt: ΔfS1 = 0 und ΔfS2 = 0. In diesem Fall sind die Frequenzen beider Detektionsoszillationen bzw. die erste und die zweite Ausleseresonanzfrequenz identisch mit der Antriebsfrequenz. Drehraten um beide sensitiven Achsen können sehr genau vermessen werden.

Der Drehratensensor umfasst vorzugsweise wenigstens ein Entkopplungssystem bzw. Entkopplungsmittel.

Es gibt verschiedene, beispielhafte Möglichkeiten, die Federelemente, Massen, Anrege- und Ausleseeinheiten eines vibrierenden Drehratensensors anzuordnen. Insbesondere ist es von Vorteil, die Antriebseinheit (AE) der Antriebsschwingung von der Ausleseeinheit (SD) der Detektionsschwingung zu entkoppeln, um Querkopplungen zwischen diesen beiden Einheiten zu vermeiden. Diese Entkopplung führt allerdings typischerweise zu einer Reduzierung der Empfindlichkeit und zu einem erhöhten Platzbedarf. Der Grad der Kopplung der Antriebseinheit (AE), der Antriebsdetektionseinheit (AD), der Detektionseinheit (SD) und der seismischen Masse (SM), an die die Corioliskraft angreift, wird im Folgenden näher definiert. Die folgenden Prinzipien beziehen sich jeweils auf eine sensitive Achse des dualaxialen Drehratensensors.

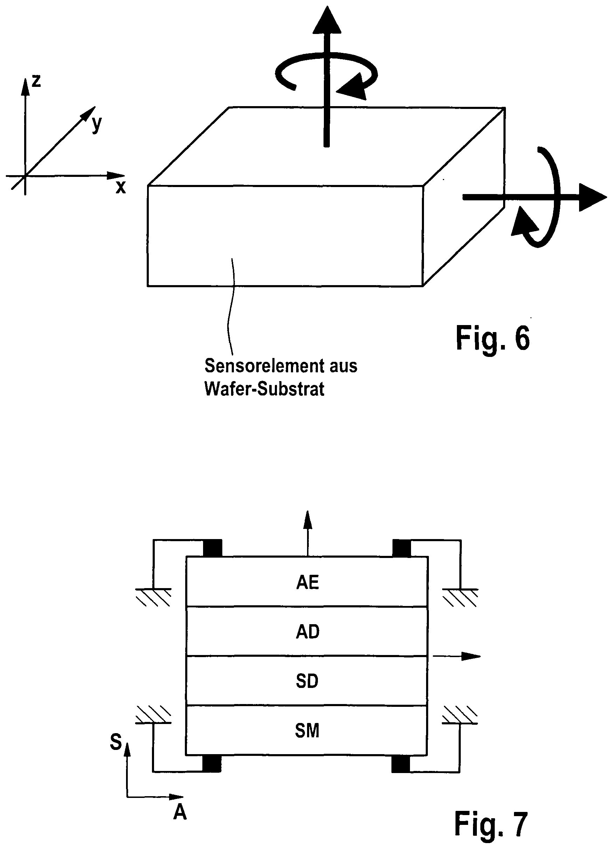

Eine bevorzugte Anordnung zur Entkopplung bzw. Ausbildung des Drehratensensors ist in Fig. 7 dargestellt. Dabei sind Antriebseinheit (AE), Antriebsdetektionseinheit (AD), Detektionseinheit (SD) und die seismische Masse (SM) starr miteinander verbunden und besitzen Freiheitsgrade in Antriebsrichtung (A) und Ausleserichtung (S). Diese Anordnung hat die höchste Drehratenverstärkung, da die Corioliskraft an die seismische Masse (SM) und an die Massen der Antriebseinheit (AE), Antriebsdetektionseinheit (AD) und der Detektionseinheit (SD) angreifen kann. Ferner benötigt diese Anordnung die wenigsten Federelemente, um Entkopplungen zu ermöglichen, weshalb die vollständig gekoppelte Anordnung die geringste räumliche Ausdehnung besitzt.

Es gibt zwei Möglichkeiten, eine einfache Entkopplung zu realisieren. Ein Sensor wird bevorzugt als einfach entkoppelt bezeichnet, wenn im Gegensatz zur vollständig gekoppelten Anordnung entweder die Bewegungsmöglichkeiten der mit der Antriebsdetektionseinheit starr gekoppelten Antriebseinheit oder die Bewegungsmöglichkeiten der Detektionseinheit auf den Freiheitsgrad in Antriebs-, bzw. Detektionsrichtung beschränkt werden.

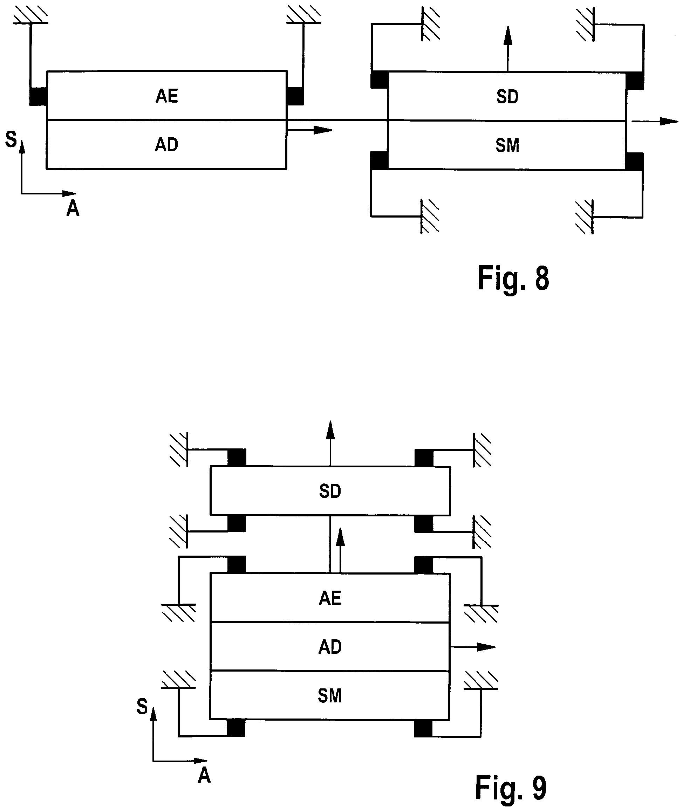

Die erste beispielhafte Möglichkeit eines einfach entkoppelten Drehratensensorprinzips besteht darin, dass die Antriebseinheit (AE) und die Antriebsdetektionseinheit (AD) starr miteinander verbunden sind und einen Freiheitsgrad nur in Antriebsrichtung (A) besitzen; die Detektionseinheit (SD) und die seismische Masse (SM) sind über Federelemente in Antriebsrichtung (A) starr mit der Antriebsmasse verbunden, besitzen aber zu dem Freiheitsgrad in Antriebsrichtung einen weiteren Freiheitsgrad in Ausleserichtung (S), wie anhand der Fig. 8 veranschaulicht. Diese Anordnung hat dieselbe Drehratenverstärkung wie das vollständig gekoppelte Prinzip, da die Corioliskraft, die zwar nur an die seismische Masse (SM) und an die Masse der Detektionseinheit (SD) angreifen kann, lediglich die seismische Masse (SM) und die Detektionseinheit im Falle einer Drehrate bewegen muss. Der Vorteil des einfach entkoppelten Drehratensensors liegt hier darin, dass sich während der Detektionsbewegung keine Rückwirkungen auf die Antriebseinheit ergeben, wodurch Störeinflüsse von der Auslesebewegung auf die Antriebsbewegung unterdrückt werden.

Eine zweite beispielgemäße Möglichkeit eines einfach entkoppelten Drehratensensorprinzips besteht darin, dass die Antriebseinheit (AE), die Antriebsdetektionseinheit (AD) und die seismische Masse (SM) starr miteinander verbunden sind und Freiheitsgrade in Antriebsrichtung (A) und Ausleserichtung (S) besitzen, während die Detektionseinheit (SD) über Federelemente so angebunden ist, dass sie lediglich einen Freiheitsgrad in Ausleserichtung (S) besitzt, siehe Fig. 9. Der Vorteil des einfach entkoppelten Drehratensensors liegt hier darin, dass sich während der Antriebsbewegung die Detektionseinheit nicht bewegt, wodurch Störeinflüsse von der Antriebsbewegung auf die Auslesebewegung unterdrückt werden.

Der einfach entkoppelte Drehratensensor benötigt mehr Federelemente als die vollständig gekoppelte Anordnung, um die Entkopplung zu ermöglichen, weshalb der einfach entkoppelte Sensor eine größere räumliche Ausdehnung als der vollständig gekoppelte Sensor besitzt.

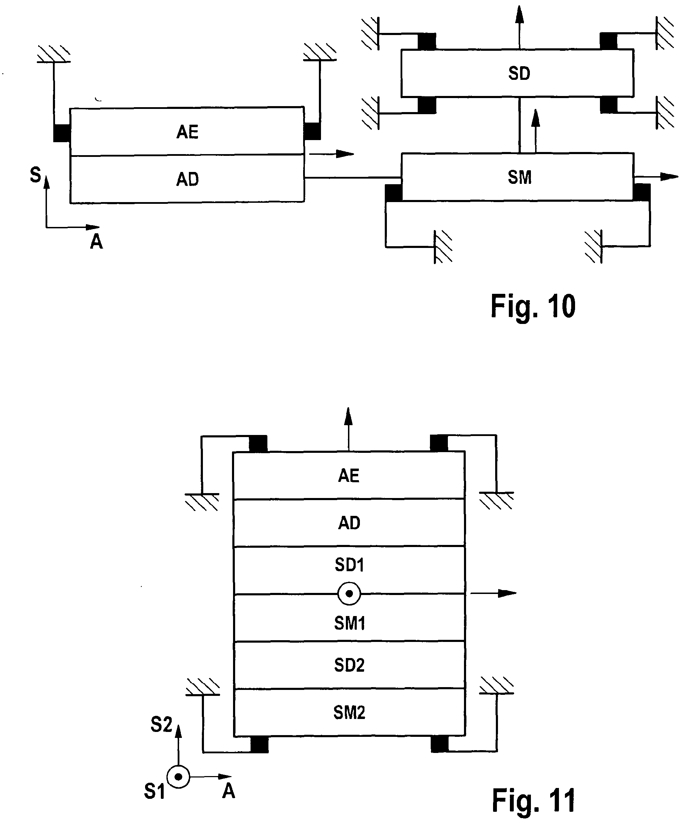

Als doppelt entkoppeltes Drehratensensorprinzip wird vorzugsweise bezeichnet, wenn die Antriebseinheit (AE) und die Antriebsdetektionseinheit (AD) starr miteinander verbunden sind und nur den Freiheitsgrad in Antriebsrichtung (A) besitzen; die seismische Masse ist in Antriebsrichtung starr mit der Antriebseinheit verbunden, besitzt aber Freiheitsgrade in Antriebsrichtung (A) und Ausleserichtung (S) und ist starr mit der Detektionseinheit (SD), die lediglich den Freiheitsgrad in Ausleserichtung (S) hat, in Ausleserichtung (S) starr über Federelemente verbunden, siehe Fig. 10. Diese Anordnung hat eine relativ geringe Drehratenverstärkung, da die Corioliskraft nur an die seismische Masse (SM) angreifen kann und nicht an die Massen der (unbewegten) Detektionseinheit (SD), der (in Ausleserichtung unbeweglichen) Antriebseinheit (AE) und der Antriebsdetektionseinheit (AD); die Detektionseinheit muss aber zur Detektion der Drehrate bewegt werden. Ferner benötigt diese Anordnung mehr Federelemente als die vollständig gekoppelte oder die einfach entkoppelte Anordnung, um die Entkopplung zu ermöglichen, weshalb der doppelt entkoppelte Sensor eine relativ große räumliche Ausdehnung besitzt. Die Vorteil des doppelt entkoppelten Drehratensensors liegen darin, dass sich einerseits während der Antriebsbewegung die Detektionseinheit nicht bewegt und andererseits während der Detektionsbewegung die Antriebs- und Antriebsdetektionseinheit in Ruhe bleiben, was zu weiterer Unterdrückung von Störeinflüssen führt.

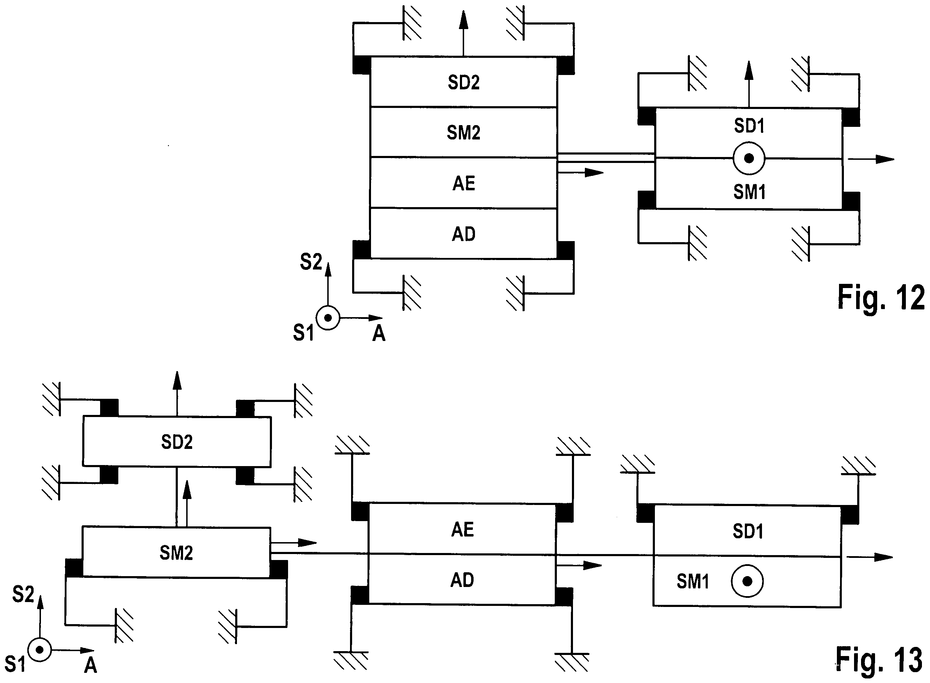

Für die Anordnung eines zweiachsigen Sensors ergeben sich beispielhaft entsprechende Kombinationen aus den oben genannten Kopplungsmodellen. Fig. 11 zeigt beispielsweise einen vollständig gekoppelten Drehratensensor, bei dem die Antriebseinheit (AE), die Antriebsdetektionseinheit (AD), die beiden Detektionseinheiten (SD1 und SD2), sowie beide seismischen Massen (SM1 und SM2) starr miteinander verbunden sind und Freiheitsgrade in alle drei Raumrichtungen aufweisen. Fig. 12 zeigt als Beispiel einen Sensor, bei dem die Detektionseinheit SD2 und die seismische Masse SM2 vollständig mit der Antriebseinheit gekoppelt sind; die mit der Antriebsdetektionseinheit (AD) starr verbundene Antriebseinheit (AE) ist einfach entkoppelt von der Detektionseinheit SD1, die mit der seismischen Masse SM1 starr verbunden ist und Freiheitsgrade in A-, S1- und S2-Richtung besitzt (einfache Entkopplung mit Antriebsabkopplung). Die seismische Masse SM2 ist aufgrund der starren Kopplung mit der seismischen Masse SM1 in S2-Richtung redundant und kann weggelassen werden. SM1 dient dann als seismische Masse für beide Detektionsrichtungen S1 und S2. Fig. 13 zeigt als Beispiel einen Sensor, bei dem die Detektionseinheit SD2 und die seismische Masse SM2 doppelt entkoppelt mit der Antriebseinheit verbunden sind; die mit der Antriebsdetektionseinheit (AD) starr verbundene Antriebseinheit (AE) ist einfach entkoppelt von der Detektionseinheit SD1, die mit der seismischen Masse SM1 starr verbunden ist und Freiheitsgrade in Aund S1-Richtung besitzt (einfache Entkopplung mit Antriebsabkopplung).

Die zusätzliche seismische Masse in den Fig. 12 und 13 ist beispielsweise als drehratensensitive Teilmasse ausgebildet, beispielsweise SM1. Die andere seismische Masse, beispielsweise SM2, ist beispielhaft als seismische Basismasse ausgebildet.

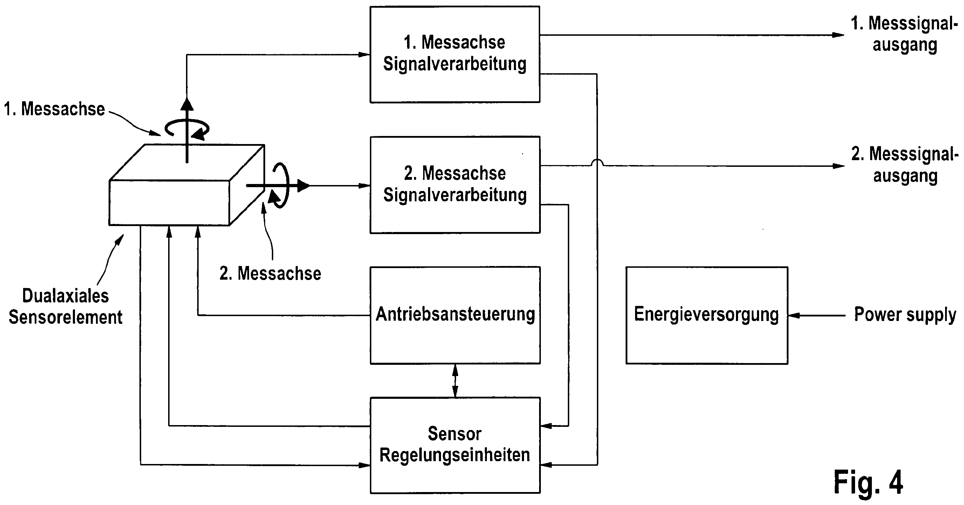

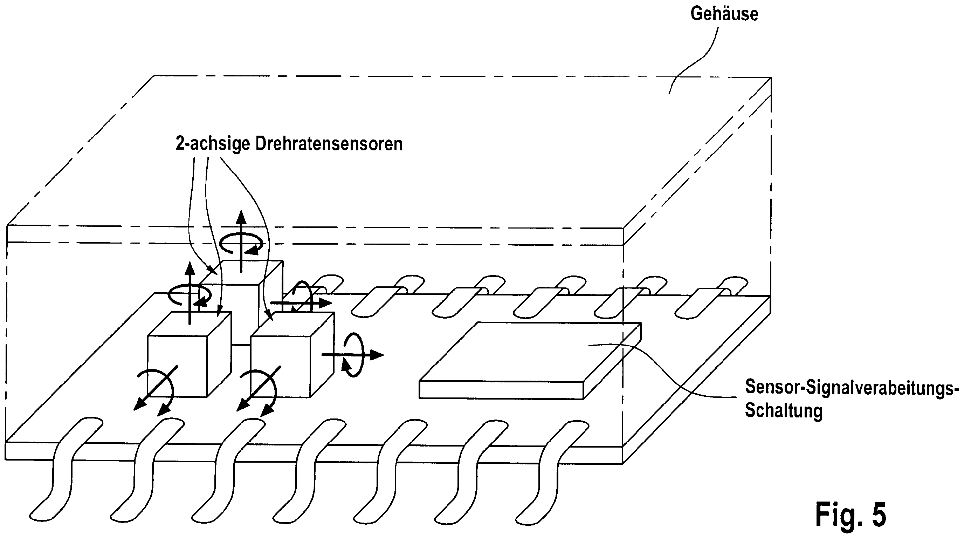

Durch die bevorzugte gemeinschaftliche Nutzung von Antrieb und Antriebsüberwachung für beide Messaufgaben, lassen sich gegenüber der Anordnung aus einzelnen Sensorelementen zur Messung von mehr als einer Drehrichtung, kleine und damit kostengünstigere Drehratensensorelemente herstellen. Zudem kann bei der Signalverarbeitung eine Antriebseinheit und Antriebsregelung, ebenso wie Spannungsversorgung, Referenzfrequenzgeber u.v.m eingespart werden, siehe Fig. 4. Damit lassen sich auch insbesondere durch die Kombination von mehreren dualaxialen Drehratensensoren Konfigurationen bzw. Sensoranordnungen herstellen, welche alle rotatorische Freiheitsgrade eines bewegten Körpers überwachen und gleichzeitig eine oder mehrere Freiheitsgrade durch redundante Messachsen überwachen, wie beispielhaft in Fig. 5 veranschaulicht. Im Gegensatz zu einer vollständigen Integration auf einem Chip, lassen sich jedoch weiterhin die einzelnen Elemente vor der Integration in einem Gehäuse prüfen und somit die Ausbeute des integrierten Systems optimieren. Weiter bleibt eine flexible Konfiguration verschiedener Messaufgaben möglich, ohne ein verändertes Sensorelement entwickeln und produzieren zu müssen. Dadurch lassen sich durch höhere Stückzahlen desselben Elements in der Fertigung die Sensorelemente kostengünstiger herstellen.

Bevorzugt ist der Drehratensensor so ausgebildet, dass er Drehraten um die x-Achse und die z-Achse eines kartesischen Koordinatensystems erfassen kann, als sensitive Achsen. Die beiden Messachsen S1 und S2 sind durch das Design orthogonal zur Wafer-Oberfläche (S1), bzw. parallel dazu (S2). Im kartesischen Koordinatensystem ist die Messachse S1 die z-Richtung und S2 die x-Richtung, siehe Fig. 6. Baut man das Element beispielsweise liegend in ein Gehäuse und montiert dieses liegend auf eine Leiterplatte, so kann bei liegendem Einbau in ein Fahrzeug S1 (z-Achse) die Gierrate des Fahrzeuges überwachen und S2 die Rollrate, bzw. Nickrate und im stehenden Einbau der Leiterplatte kann S2 die Gierrate und S1 die Roll- bzw. Nickrate überwachen. Damit entfallen komplizierte und teuere Sensoraufbauten in einem Gehäuse oder auf Leiterplatte, wie es bei einem dualaxialen Drehratensensor mit den Messachsen nur in der Waferebene (x- und y-Richtung) der Fall wäre, um alle möglichen Einbauvarianten abzudecken. Bei einem x-/y-Drehratensensor muss bei liegendem Einbau der Leiterplatte entweder das Element oder das Element im Gehäuse senkrecht auf der Leiterplatte montiert werden, um die Gierrate des Fahrzeuges überwachen zu können. Um gegenüber äußeren Störeinflüssen möglichst insensitiv zu sein, wird der zweiachsige Drehratensensor bevorzugt so aufgebaut, dass er mindestens zwei seismische Massen für jede sensitive Achse umfasst. Diese werden so angeordnet, dass sie als Reaktion auf eine externe Drehrate zu gegenphasigen Schwingungen angeregt werden. Die seismischen Massen werden hierzu jeweils in Antriebsrichtung in Gegenphase angetrieben. Dies hat den zusätzlichen Vorteil, dass bei symmetrischer Sensoranordnung der Schwerpunkt des gesamten Sensors in Ruhe bleibt und Wechselwirkungen mit der Umgebung während der Antriebsbewegung vermieden werden. Externe Störungen durch Linearbeschleunigungen etwa, die zu einer gleichphasigen Auslenkung der seismischen Massen führen würden, können durch diese Form der Anordnung von Reaktionen auf Drehraten unterschieden werden. Um externe Störungen der Anordnung weiter zu unterdrücken, ist es von besonderem Vorteil, die Detektionseinheiten der gegenphasig schwingenden seismischen Massen direkt oder indirekt insbesondere so miteinander zu verbinden, dass nur gegenphasige Detektionsbewegungen zugelassen werden. Dazu können ein oder mehrere Kopplungsbalken (CB) rotatorisch so aufgehängt werden, dass nur gegenphasige Bewegungen der Detektionseinheiten zugelassen werden, vgl unsere Patentanmeldung "Unterdrückung von parasitären Moden bei resonant gekoppelten mikromechanischen Drehratensensoren".

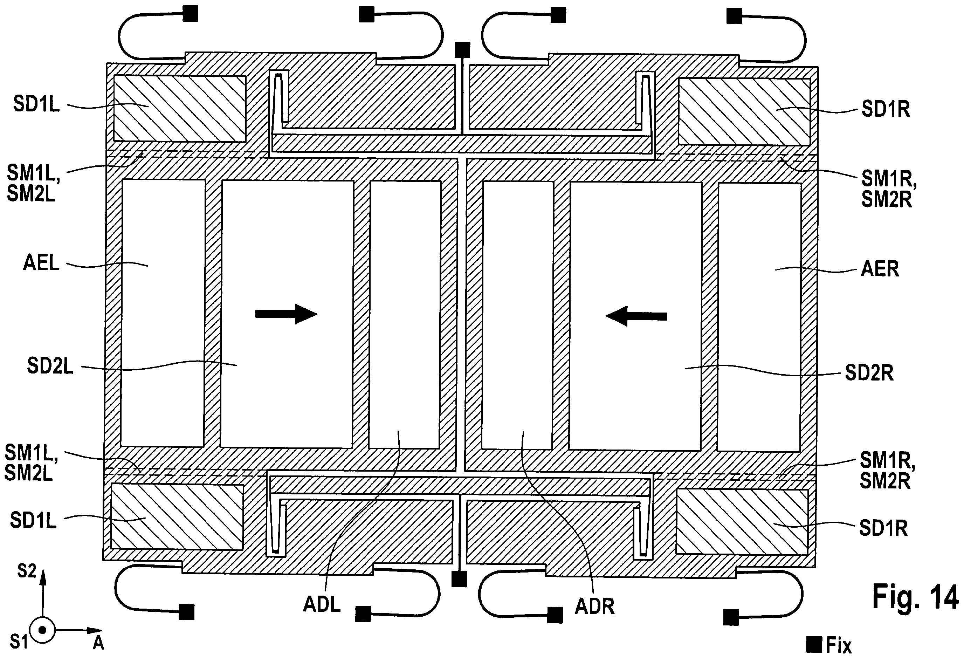

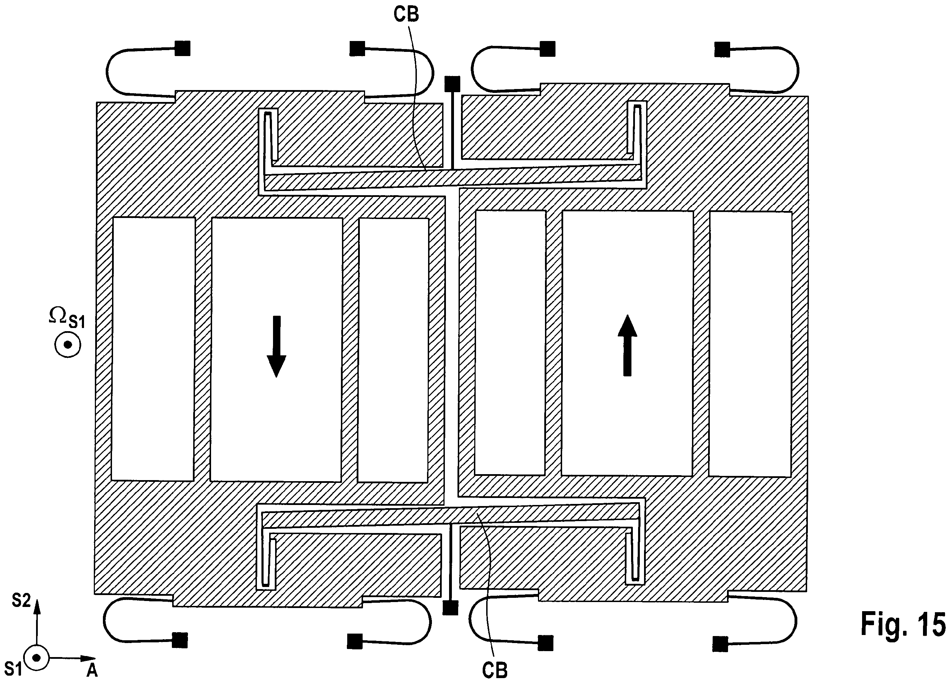

Fig. 14 zeigt einen beispielhaften dualaxialen Drehratensensor, der aus zwei gegeneinander schwingenden seismischen Massen (SM1L=SM2L und SM1R=SM2R) aufgebaut ist. Dabei sind die die seismischen Massen einer Seite (SM1L=SM2L, bzw. SM1R=SM2R) jeweils vollständig mit der jeweiligen Antriebs-(AEL, bzw. AER), Antriebsdetektionseinheiten (ADL, bzw. ADR) und Detektionseinheit (SD1L und SD2L, bzw. SD1R und SD2R) gekoppelt, vgl. Fig. 7. Die Detektionseinheiten SD2L und SD2R sind über zwei Kopplungsbalken CB, wie anhand der Fig. 15 veranschaulicht, so gekoppelt, dass sie sich in S2-Richtung nur in Gegenphase bewegen können. Dies ist die Bewegung, die im Falle einer Drehrate um die S1-Achse ausgeführt wird. Treten Linearbeschleunigungen in S2-Richtung auf, so werden diese durch den rotatorisch aufgehängten Balken blockiert.

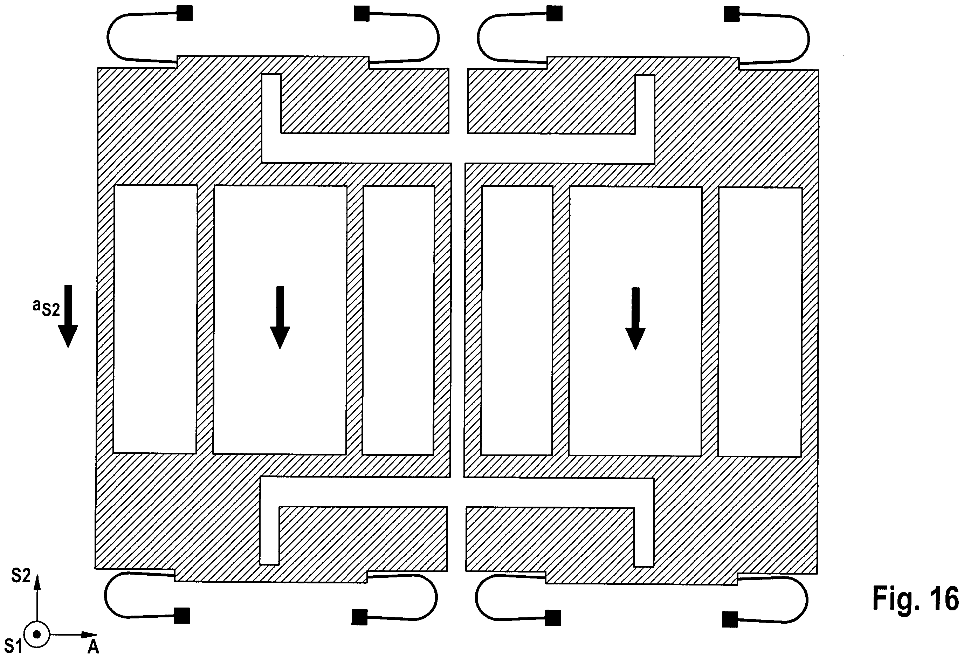

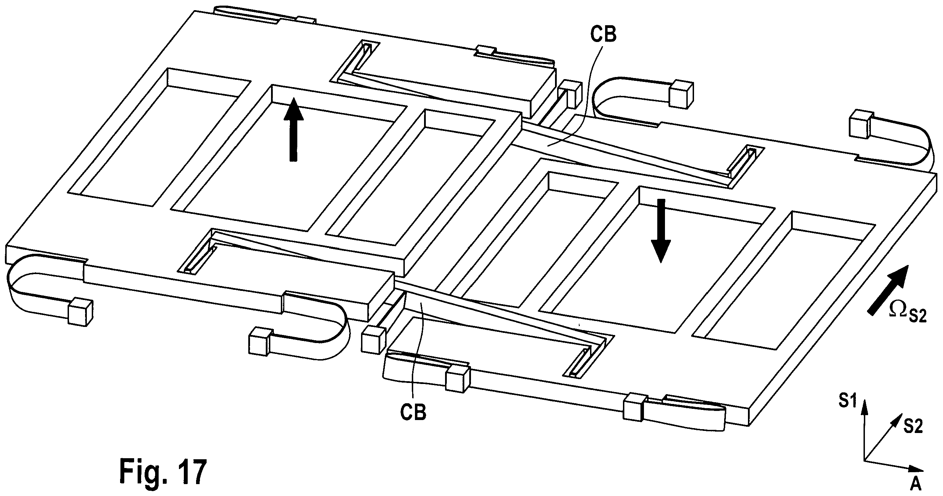

Fig. 16 veranschaulicht beispielhaft die Reaktion des Drehratensensors ohne Kopplungsbalken auf eine Linearbeschleunigung aS2 in S2-Richtung. Die Detektionseinheiten SD1L und SD1R sind über dieselben Kopplungsbalken CB, wie in Fig. 17 dargestellt, so gekoppelt, dass sie sich in S1-Richtung nur in Gegenphase bewegen können. Dies ist die Bewegung, die im Falle einer Drehrate um die S2-Achse ausgeführt wird. Treten Linearbeschleunigungen in S1-Richtung auf, so werden diese durch den rotatorisch aufgehängten Balken blockiert.

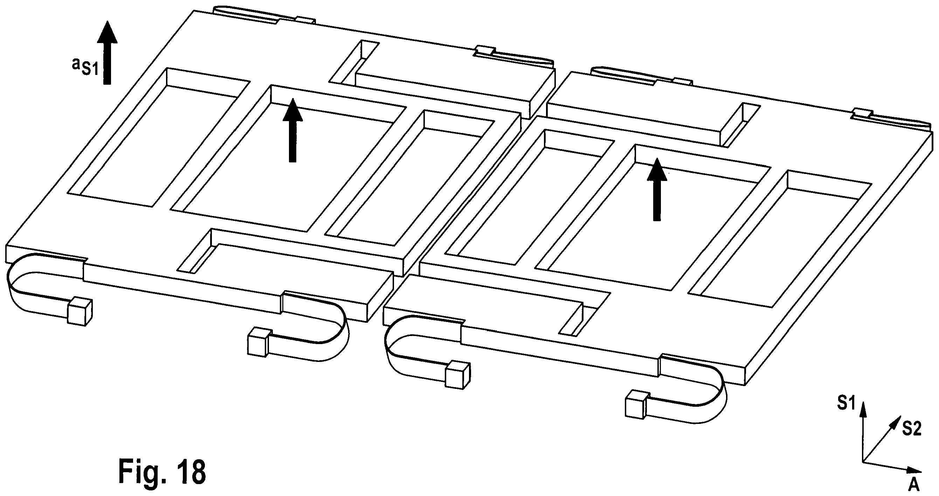

Fig. 18 veranschaulicht beispielhaft die Reaktion des Drehratensensors ohne Kopplungsbalken auf eine Linearbeschleunigung aS1 in S1-Richtung.

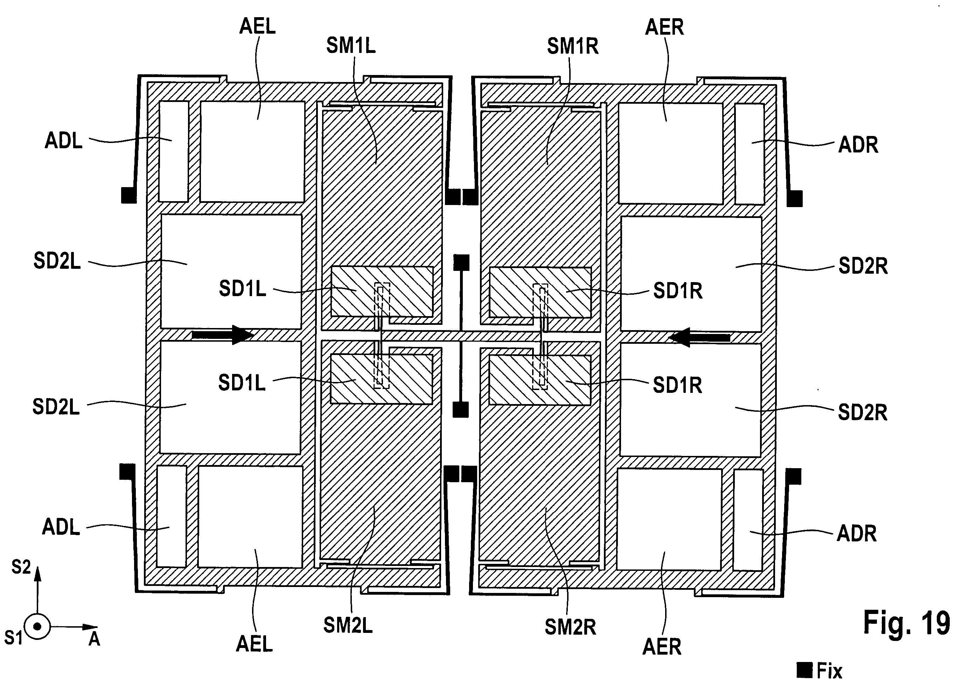

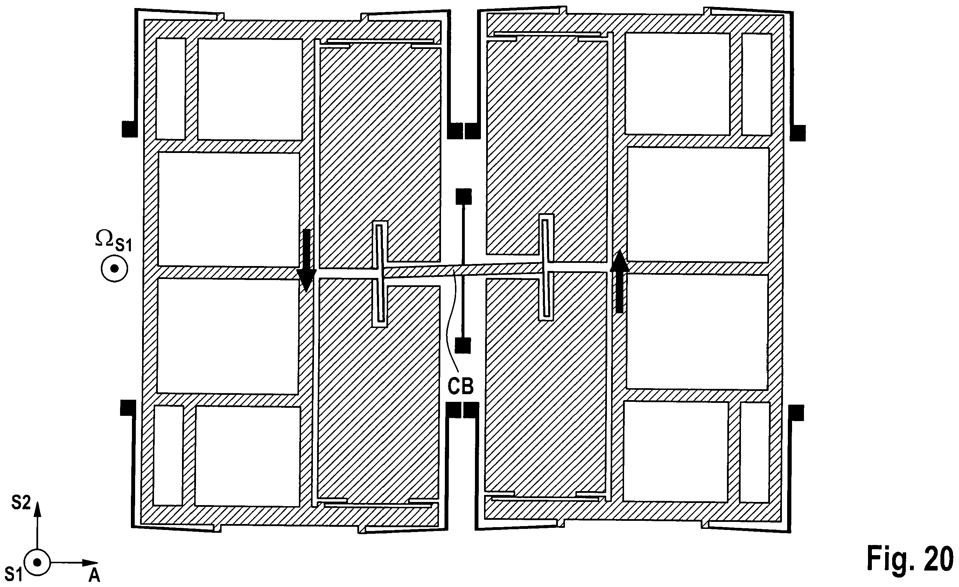

In Fig. 19 ist ein Beispiel eines dualaxialen Drehratensensors dargestellt, der aus gegeneinander schwingenden seismischen Massenpaaren (SM1L=SM2L und SM1R=SM2R) aufgebaut ist. Dabei ist das System bestehend aus den seismischen Massen zur Detektion einer Drehrate um die S1-Achse (SM1L=SM2L, bzw. SM1R=SM2R) mit den zugehörigen Detektionseinheiten (SD2L, bzw. SD2R) und den jeweiligen Antriebs-(AEL, bzw. AER) und Antriebsdetektionseinheiten (ADL, bzw. ADR) vollständig gekoppelt. Die Antriebs- (AEL, bzw. AER) und Antriebsdetektionseinheiten (ADL, bzw. ADR) sind von den seismischen Massen zur Detektion einer Drehrate um die S2-Achse (SM1L=SM2L, bzw. SM1R=SM2R) und den zugehörigen Detektionseinheit (SD1L, bzw. SD1R) in Ausleserichtung einfach abgekoppelt, vgl. Fig. 8. Die Detektionseinheiten SD2L und SD2R sind (indirekt) über einen Kopplungsbalken CB (s. Fig. 20) so gekoppelt, dass sie sich in S2-Richtung nur in Gegenphase bewegen können. Dies ist die Bewegung, die im Falle einer Drehrate um die S1-Achse ausgeführt wird. Treten Linearbeschleunigungen in S2-Richtung auf, so werden diese durch den rotatorisch aufgehängten Balken blockiert.

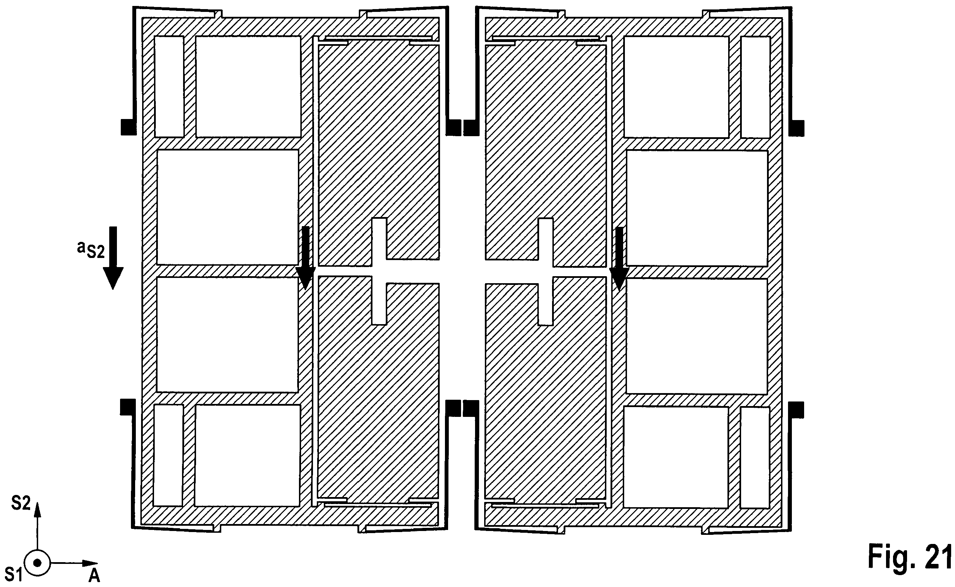

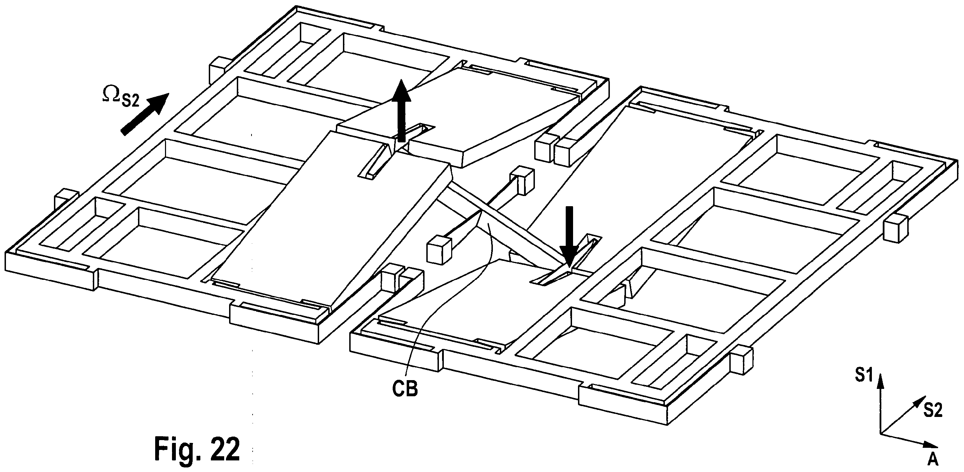

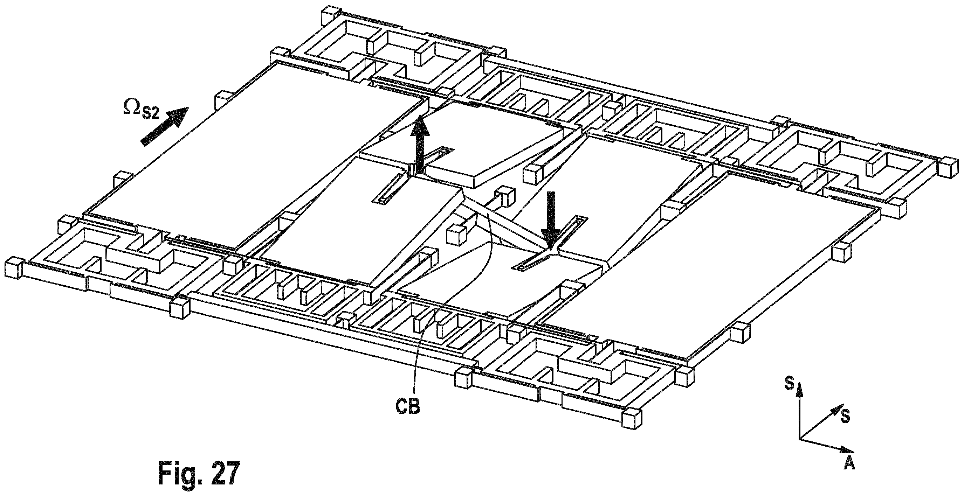

Fig. 21 veranschaulicht beispielhaft die Reaktion des Drehratensensors ohne Kopplungsbalken auf eine Linearbeschleunigung aS2 in S2-Richtung. Die Detektionseinheiten SD1L und SD1R sind über denselben Kopplungsbalken CB (s. Fig. 22 bzw. Fig. 27) so gekoppelt, dass sie sich in S1-Richtung nur in Gegenphase bewegen können. Dies ist die Bewegung, die im Falle einer Drehrate um die S2-Achse ausgeführt wird. Treten Linearbeschleunigungen in S1-Richtung auf, so werden diese durch den rotatorisch aufgehängten Balken blockiert.

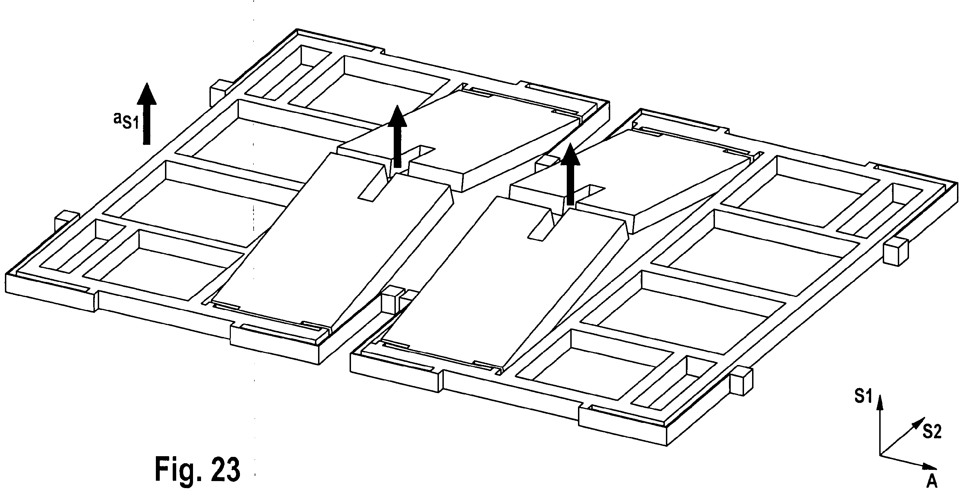

Fig. 23 veranschaulicht beispielhaft die Reaktion des Drehratensensors ohne Kopplungsbalken auf eine Linearbeschleunigung aS1 in S1-Richtung.

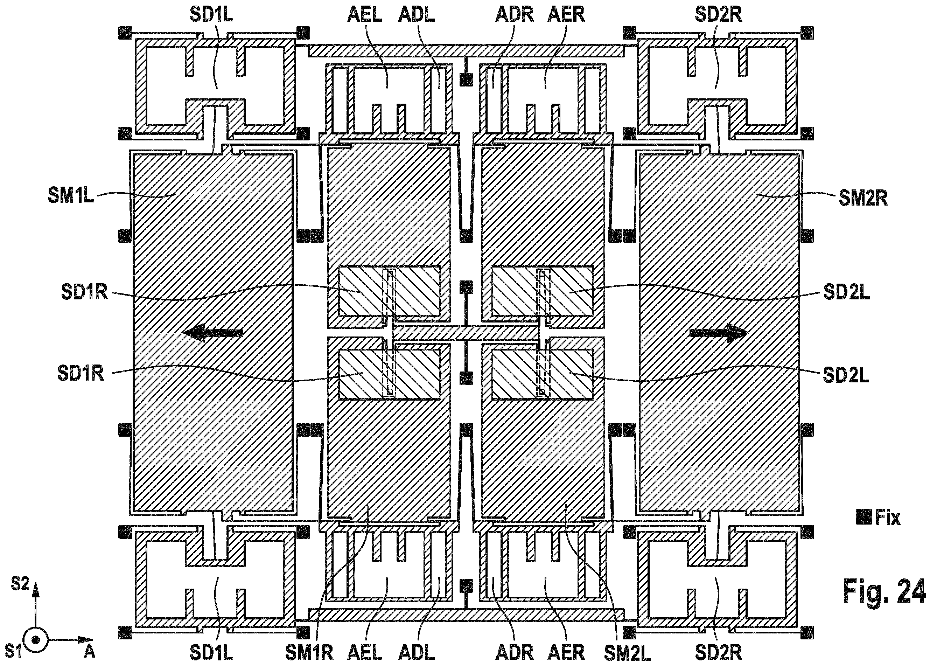

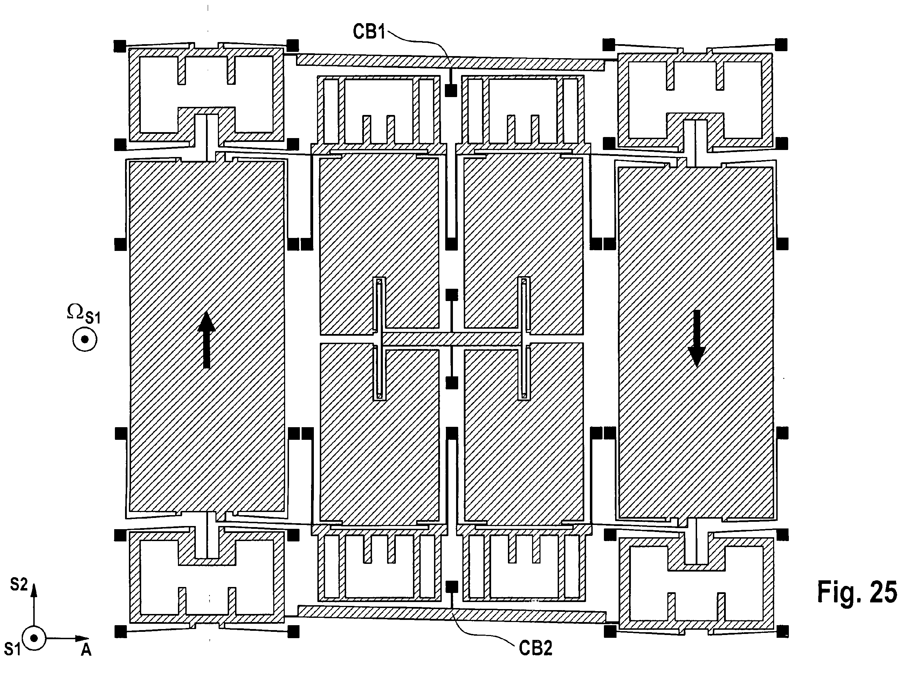

Fig. 24 zeigt ein erfindungsgemäßes Ausführungsbeispiel eines Drehratensensors, der aus gegeneinander schwingenden seismischen Massenpaaren (SM1R/SM1L und SM2L/SM2R) aufgebaut ist. Dabei ist das System bestehend aus den seismischen Massen zur Detektion einer Drehrate um die S1-Achse (SM1L, bzw. SM2R), den zugehörigen Detektionseinheiten (SD1L, bzw. SD2R) und den jeweiligen Antriebs- (AEL, bzw. AER) und Antriebsdetektionseinheiten (ADL, bzw. ADR) doppelt entkoppelt. Die Antriebs- (AEL, bzw. AER) und Antriebsdetektionseinheiten (ADL, bzw. ADR) sind von den seismischen Massen zur Detektion einer Drehrate um die S2-Achse (SM1L, bzw. SM1R) und den zugehörigen Detektionseinheiten (SD1R, bzw. SD2L) einfach abgekoppelt, vgl. Fig. 9. Die Detektionseinheiten SD1L und SD2R sind über zwei Kopplungsbalken CB1 und CB2(s Fig. 25) so gekoppelt, dass sie sich in S2-Richtung nur in Gegenphase bewegen können. Dies ist die Bewegung, die im Falle einer Drehrate um die S1-Achse ausgeführt wird. Treten Linearbeschleunigungen in S2-Richtung auf, so werden diese durch den rotatorisch aufgehängten Balken blockiert.

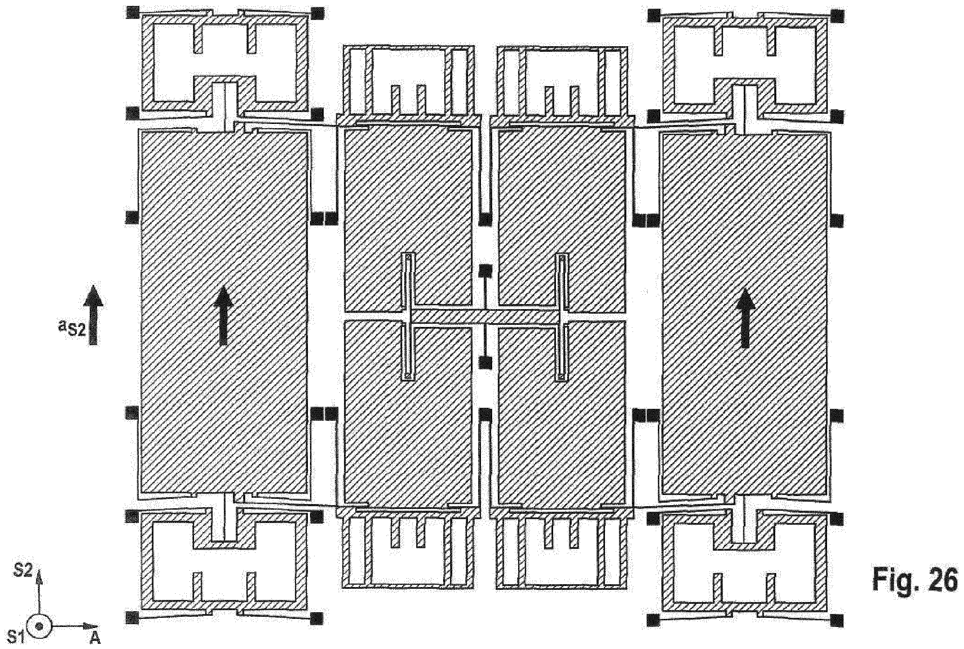

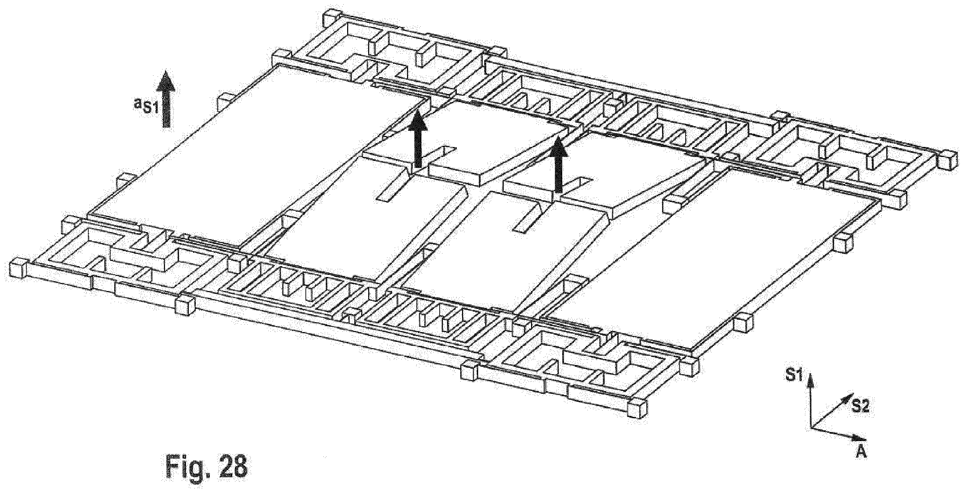

Fig. 26 veranschaulicht beispielhaft die Reaktion des Drehratensensors ohne Kopplungsbalken auf eine Linearbeschleunigung aS2 in S2-Richtung. Die Detektionseinheiten SD1R und SD2L sind über den Kopplungsbalken CB (s. Fig. 27) so gekoppelt, dass sie sich in S1-Richtung nur in Gegenphase bewegen können. Dies ist die Bewegung, die im Falle einer Drehrate um die S2-Achse ausgeführt wird. Treten Linearbeschleunigungen in S1-Richtung auf, so werden diese durch den rotatorisch aufgehängten Balken blockiert. Fig. 28 veranschaulicht beispielhaft die Reaktion des Drehratensensors ohne Kopplungsbalken auf eine Linearbeschleunigung aS1 in S1-Richtung.

Aufgrund von Prozessschwankungen kann es zu Asymmetrien in der Geometrie des Drehratensensors kommen. Insbesondere kann eine Querkopplung zwischen Antriebs- und Detektionsoszillator entstehen, so dass die Antriebsbewegung direkt den Detektionsoszillator zu einer parasitären Schwingung anregt. Während die Phase der Detektionsschwingung durch eine Corioliskraft durch die Geschwindigkeit der Antriebsschwingung gegeben ist, ergibt sich die Phase der parasitären Oszillation durch die Ortsfunktion des Antriebsoszillators. Diese Oszillation des Ausleseoszillators ist also im Vergleich zu einer durch Corioliskraft erzeugten Schwingung um 90° phasenverschoben und wird auch Quadratursignal genannt. Dieses parasitäre Signal kann die Drehratenmessung stören, weswegen Vorrichtungen wie eine beispielhafte Quadraturtrimmungs-Aktoreinheit vorteilhaft sind, diese Schwingung zu unterdrücken. Es besteht die Möglichkeit, durch das Anlegen von elektrischen Spannungen an diese Quadraturtrimmungs-Aktoreinheit die Quadraturbewegung zu kompensieren.

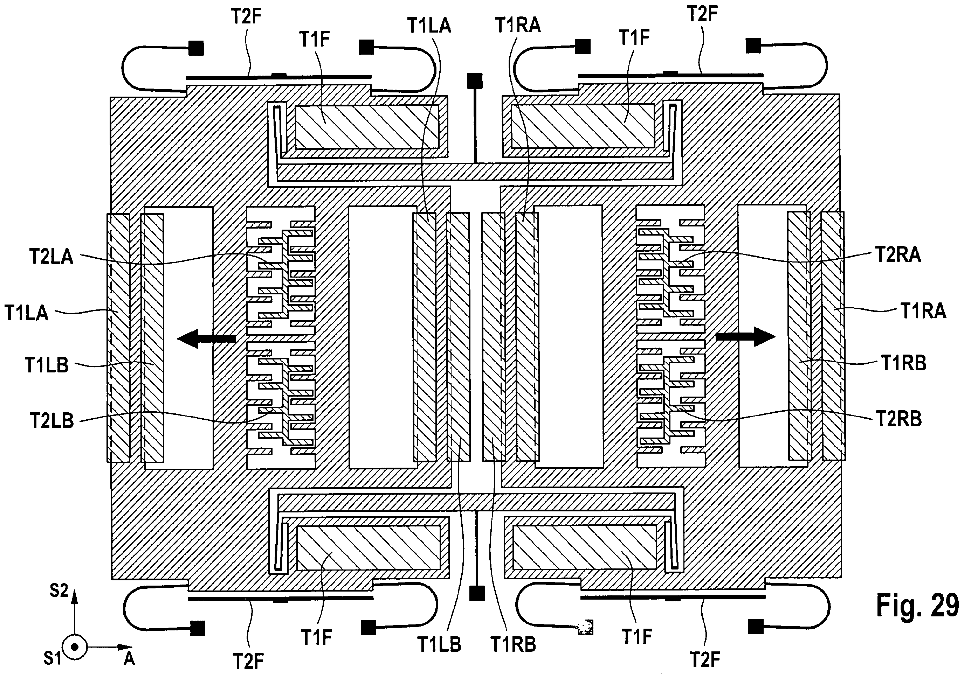

Für den Fall der Quadraturbewegung bei der Messung einer Drehrate um S1 können bevorzugt Kammstrukturen verwendet werden, wobei die freien Kämme mit der beweglichen Struktur verbunden sind und die Gegenkämme am Substrat fixiert sind. Fig. 29 zeigt für den Sensor aus Fig. 14 die Anwendung dieser Kompensationsvorrichtung bzw. solcher Quadraturtrimmungs-Aktoreinheit mit speziellen Quadraturtrimmungs-Kammstrukturen (T2LA, T2RB, T2LB, T2RA). Diese Kammstrukturen können an jeden beliebig gekoppelten Drehratensensor angebracht werden. Wichtig ist dabei, dass der bewegliche Teil der Kammstrukturen mit der seismischen Masse in Antriebsrichtung starr verbunden ist. Legt man an die fixierten Kammstrukturen T2LA, T2RB, T2LB und T2RA unterschiedliche Spannungen an, so kann Quadraturbewegung unterdrückt werden. So legt man beispielsweise an die fixierten Kammstrukturen T2LA, T2RB eine Spannung ULARB an und an die fixierten Kammstrukturen T2LB, T2RA eine Spannung ULBRA, während die bewegliche Struktur geerdet ist.

Für den Fall der Quadraturbewegung bei der Messung einer Drehrate um S2 können zweckmäßigerweise Deckelelektroden ober- oder unterhalb der beweglichen Struktur angebracht werden, so dass sie die gegenüberliegende Struktur überlappen. Fig. 29 zeigt für den Sensor aus Fig. 14 die Anwendung dieser Kompensationsvorrichtung, also einer Quadraturtrimmungs-Aktoreinheit mit Elektrodenstrukturen (T1LA, T1RB, T1LB, T1RA). Diese Elektrodenstrukturen können an jeden beliebig gekoppelten Drehratensensor angebracht werden. Wichtig ist dabei, dass der den Elektroden gegenüberliegende Teil der Struktur mit der seismischen Masse in Antriebsrichtung starr verbunden ist. Legt man an die fixierten Elektroden T1LA, T1RB, T1LB und T1RA unterschiedliche Spannungen an, so kann Quadraturbewegung unterdrückt werden. So legt man beispielsweise an die fixierten Elektroden T1LA, T1RB eine Spannung ULARB an und an die fixierten Elektroden T1LB, T1RA eine Spannung ULBRA, während die bewegliche Struktur geerdet ist.

Durch die bevorzugte Benutzung spezieller, beispielsweise u-förmiger, Federelemente kann das Auftreten von Quadratur stark reduziert werden. Dieses Federelement ist besonders insensitiv gegenüber einer Prozessschwankung, die zu einer Verkippung des Querschnitts einer Balkenfeder und somit zu Querkopplungen zwischen den Moden führt. Eine zweckmäßige Ausführungsform solch eines speziellen Federelements ist beispielhaft anhand der Fig. 14 -18 zur Aufhängung der Sensorstrukturen dargestellt.

Die Sensoren können ferner bevorzugt mit, insbesondere zusätzlichen, Mitteln, wie beispielgemäß Resonanzfrequenzverschiebe-Aktoreinheiten, ausgestattet werden, mit denen die Frequenz des entsprechenden Detektionsoszillators beeinflusst werden kann. Dies kann beispielsweise durch Plattenkondensatoren dieser Resonanzfrequenzverschiebe-Aktoreinheiten erreicht werden. Dazu müssen die beweglichen Strukturen des jeweiligen Kondensators mit der Auslesestruktur in Detektionsrichtung starr verbunden sein. Bei Anlegen einer Spannung UF an die fixierten Kammstrukturen T2F bzw. an die fixierten Elektrodenstrukturen T1F der jeweiligen Resonanzfrequenzverschiebe-Aktoreinheiten, siehe jeweils Fig. 29, ergibt sich eine Verminderung des Wertes der Frequenz fS1 bzw. fS2, die eine Funktion U_{F}² ist.
Dies kann bei beliebig gekoppelten Systemen angebracht werden. Wichtig dabei ist, dass die Strukturen zur Verschiebung der Frequenz beispielhaft so angebracht werden, dass deren bewegliche Teile mit der Detektionseinheit in Ausleserichtung starr verbunden sind.
Schließlich besteht vorzugsweise noch die Möglichkeit, mittels einer Resonanzfrequenzverschiebe-Aktoreinheite umfassend Kammstrukturen, die Frequenz der Antriebsmode zu verschieben. Dazu müssen Kammstrukturen in der Substratebene angebracht werden, deren bewegliche Teile mit der Antriebseinheit so verbunden sind, dass sich die Kapazität zwischen den beweglichen und fixierten Kämmen näherungsweise proportional zur Antriebsbewegung ändert. Bei Anlegen einer Spannungsdifferenz zwischen den beweglichen und fixierten Kämmen kommt es zu einer Erniedrigung der Antriebsfrequenz.

Zweckmäßigerweise wird das Drehratensignal bestimmt, indem die Kraft gemessen wird, die zur Rückstellung der Detektionsauslenkung benötigt wird. Hierzu weist der entsprechende Drehratensensor eine Rückstellungs-Aktoreinheit auf.

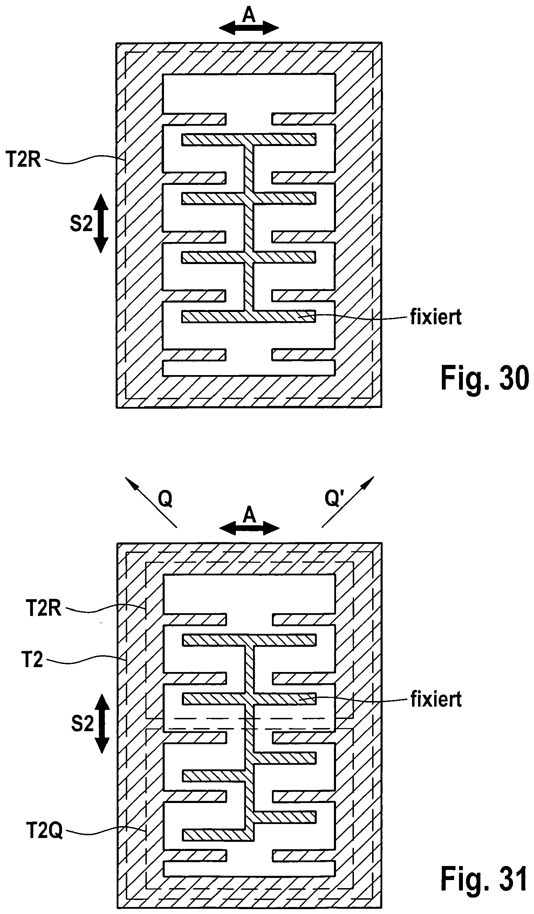

Fig. 30 zeigt eine beispielhafte Kammstruktur, die das leisten kann, also eine Rückstellungs-Kammstruktur, wenn sie starr mit der Ausleseeinheit verbunden wird. Durch Anlegen einer Spannung an die fixierten Kämme kann eine rückstellende Kraft auf die seismische Masse, die mit den beweglichen Kämmen verbunden ist, ausgeübt werden, so dass die Detektionsbewegung rückgestellt wird. Die Kammstrukturen bilden hierbei Plattenkondensatoren, deren Abstand durch die Detektionsbewegung variiert wird. Die angelegte Spannung besteht aus einem konstanten Anteil und einem zeitlich variablen Anteil Uffb mit derselben Frequenz wie die Detektionsbewegung in der geeigneten
Phasenlage. Die Stärke der Rückstellkraft ist proportional zum Produkt des konstanten Spannungsanteils und der Amplitude des zeitlich variablen Anteils Û_{ffb}.

Die Kammstrukturen aus Fig. 30 können beispielhaft so umgebildet werden, wie in Fig. 31 veranschaulicht, dass sie gleichzeitig zur Quadraturkompensation verwendet werden können, also als eine kombinierte Kammstruktur ausgebildet sind, die eine Quadraturtrimmungs-Kammstruktur und eine Rückstellungs-Kammstruktur umfasst. Dazu müssen Kammstrukturen, wie die in Fig. 29 gezeigten Vorrichtungen T2LA, T2RB, T2LB und T2RA hinzugefügt werden, so dass die gesamte Kompensationsstruktur aus einer Quadraturtrimmungs-Kammstruktur T2Q zur Quadraturunterdrückung und einer Rückstellungs-Kammstruktur T2R zur Detektionsbewegungsrückstellung bzw. Ausleseschwingungsrückstellung bestehen. An den fixierten Kammstrukturen liegt weiterhin eine Spannung an, die aus einem konstanten Anteil und einem zeitlich variablen Anteil mit derselben Frequenz wie die Detektionsbewegung besteht. Damit kann aber nur eine Quadraturbewegung Q rektifiziert werden. Um auch mögliche Quadraturbewegungen Q' zu unterdrücken, muss mindestens eine weitere Quadraturunterdrückungseinheit hinzugefügt werden.

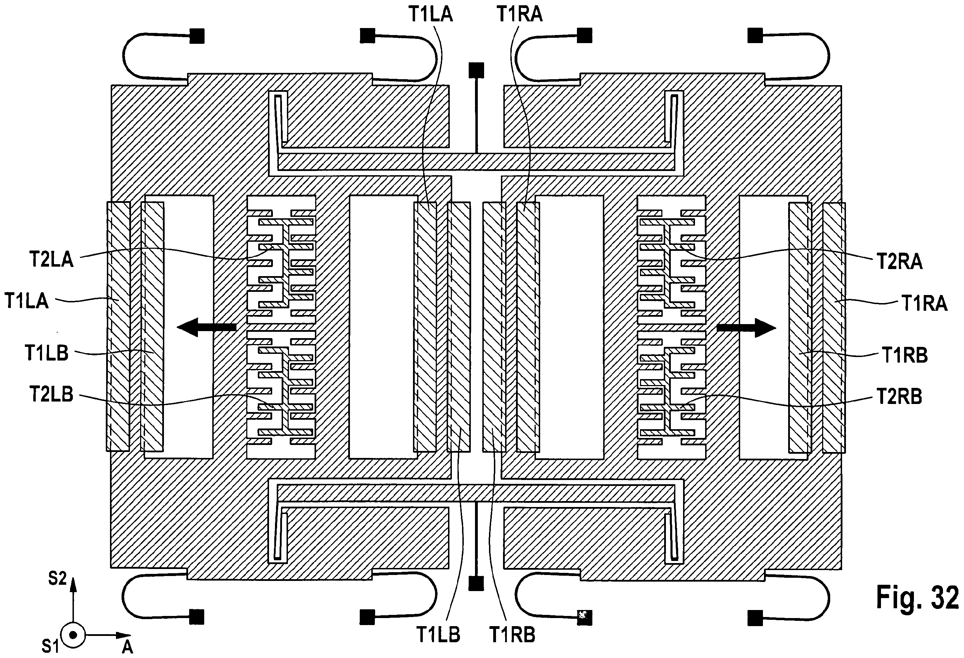

In Fig. 32 ist beispielhaft der Drehratensensor aus Fig. 14 dargestellt, bei dem vier kombinierte Quadraturtrimmungs-Rückstellungs-Aktoreinheiten zur Quadraturtrimmung und zur Rückstellung gemäß Fig. 31 angebracht wurden. Legt man beispielsweise an die fixierten Kammstrukturen T2LA, T2RB eine Spannung ULARB + Uffb an und an die fixierten Kammstrukturen T2LB, T2RA eine Spannung ULBRA - Uffb, während die bewegliche Struktur geerdet ist, so kann gleichzeitig Quadraturbewegung kompensiert und die Detektionsbewegung rückgestellt werden. Mithilfe der Parameter ULARB, ULBRA und Uffb können gleichzeitig die Quadratur kompensiert und die Drehbewegung rückgestellt werden.

Zur Rückstellung einer Detektionsbewegung aufgrund einer Rotation um S2 können bevorzugt zusätzliche Elektroden angebracht werden, die ähnlich den Detektionselektroden SD1L und SD1R in Fig. 14 und Fig. 24 gestaltet werden können. Durch Anlegen einer Spannung an die fixierten Elektroden kann eine rückstellende Kraft auf die gegenüberliegende seismische Masse ausgeübt werden, so dass die Detektionsbewegung rückgestellt wird. Die angelegte Spannung besteht aus einem konstanten Anteil und einem zeitlich variablen Anteil Uffb mit derselben Frequenz wie die Detektionsbewegung in der geeigneten Phasenlage. Die Stärke der Rückstellkraft ist proportional zum Produkt des konstanten Spannungsanteils und der Amplitude des zeitlich variablen Anteils Û_{ffb}.
Die Elektrodenstrukturen T1LA, T1RB, T1LB und T1RA in Fig. 32 können neben der Quadraturkompensation auch zur Rückstellung einer Detektionsbewegung in S1-Richtung verwendet werden. Dazu können beispielsweise an die fixierten Elektroden T1LA, T1LB, T1RA und T1RB die Spannungen ULARB + Uffb, ULBRA + Uffb, ULARB - Uffb und ULBRA - Uffb angelegt werden, während die bewegliche Struktur geerdet ist. Mithilfe der Parameter ULARB, ULBRA und Uffb können gleichzeitig die Quadratur kompensiert und die Drehbewegung rückgestellt werden. Kostengünstige Herstellung

Der Drehratensensor wird zweckmäßigerweise mittels mikromechanischen Fertigungsmethoden hergestellt. Diese umfassen u. a. Silizium-Trockenätzen, nasschemisches Silizium-Ätzen, schleifen und polieren, Dünnfilmabscheidung von Metallen und Isolationsschichten, Strukturieren dünner Schichten durch photolithographische Prozesse und reaktives Ionenätzen bzw. nasschemisches Ätzen und Waferbonden. Durch diese Fertigungsmethoden lassen sich kostengünstige Sensorelemente aus einem planen Siliziumsubstrat (Wafer) herstellen. Übersicht

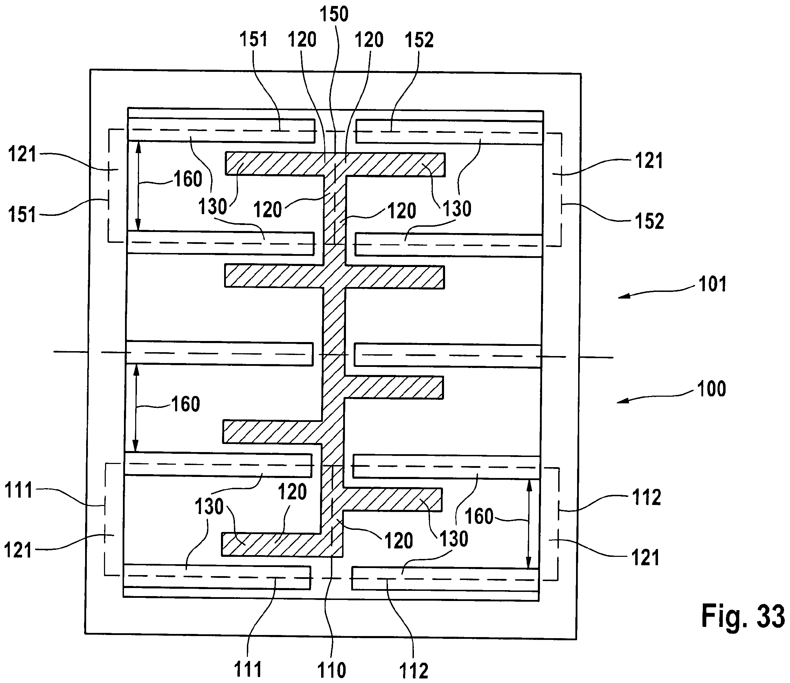

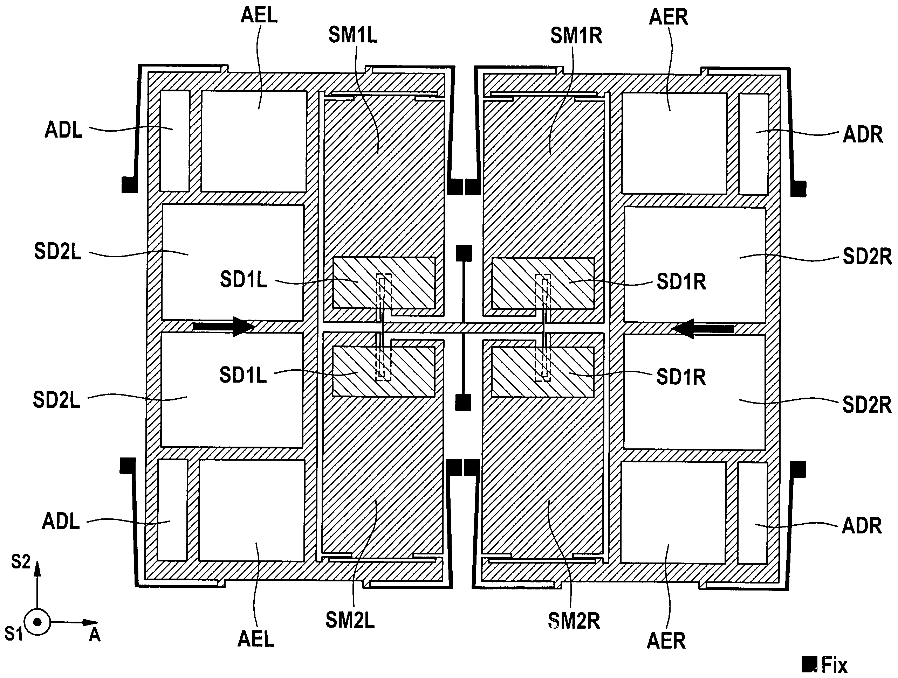

In Fig. 33 ist zusätzlich noch einmal die kombinierte Kammstruktur einer kombinierten Quadraturtrimmungs-Rückstellungs-Aktoreinheit veranschaulicht. Diese umfasst eine Quadraturtrimmungs-Kammstruktur 100 sowie eine Rückstellungs-Kammstruktur 101. Die Geometrie der Quadraturtrimmungs-Kammstruktur definiert sich wie folgt: Mindestens ein Kammstrukturbasiselementenpaar 110, welches zumindest aus einem ersten 111 und einem zweiten 112 Kammstrukturbasiselement besteht, welche jeweils einen ersten 120 und einen zweiten 121 Kammrücken sowie damit jeweils einstückig verbundene Zinken 130 umfassen, wobei die Zinken dieses ersten und zweiten Kammrückens berührungslos, alternierend, ineinandergreifen, wobei das zweite Kammstrukturbasiselement 112 im Vergleich zum ersten Kammstrukturbasiselement 111 im Wesentlichen so ausgebildet und angeordnet ist, dass bezüglich der geometrischen Betrachtung ausgehend vom ersten Kammstrukturbasiselement 111 dieses zweite Kammstrukturbasiselement 112 bezogen auf eine Normale der Substratoberfläche um 180° gedreht ist und insbesondere innerhalb der Substratebene translatorisch verschoben ist. Die Geometrie der Rückstellungs-Kammstruktur 101 definiert sich wie folgt: Diese Rückstellungs-Kammstruktur 101 umfasst mindestens ein Kammstrukturbasiselementenpaar 150, welches zumindest aus einem ersten 151 und einem zweiten 152 Kammstrukturbasiselement besteht, welche jeweils einen ersten 120 und einen zweiten Kammrücken 121 sowie damit jeweils einstückig verbundene Zinken 130 umfassen, wobei die Zinken dieses ersten und zweiten Kammrückens berührungslos, alternierend, ineinandergreifen, wobei das zweite Kammstrukturbasiselement 152 im Vergleich zum ersten Kammstrukturbasiselement 151 im Wesentlichen so ausgebildet und angeordnet ist, dass bezüglich der geometrischen Betrachtung ausgehend vom ersten Kammstrukturbasiselement dieses zweite Kammstrukturbasiselement an einer Geraden, parallel zu wenigstens einem der ersten 120 oder zweiten Kammrücken 121 gespiegelt ist und insbesondere innerhalb der Substratebene translatorisch verschoben ist.

Die gesamte, kombinierte Kammstruktur aus Fig. 33 weist dabei einen gemeinsamen, einstückigen ersten Kammrücken 120 auf, welcher beidseitig abragende Zinken 130 aufweist. Zweiter Kammrücken 121 ist ebenfalls einstückig, gemeinsam ausgebildet und dabei als Rahmen ausgebildet, der bezüglich zweier gegenüberliegender Seiten nach innen abragende Zinken 130 umfasst. Die Zinken 130 des ersten Kammrückens 120 greifen dabei bezogen auf einen Ruhezustand bzw. einen unausgelenkten Zustand nicht mittig bezogen auf die begrenzenden Zinken einer Zinkenlücke 160 des zweiten Kammrückens 121 in die jeweiligen Zinkenlücken 160 ein. Der erste gemeinsame Kammrücken 120 ist starr mit dem Substrat und einem gemeinsamen elektrischen Potential verbunden. Der zweite gemeinsame, als Rahmen ausgebildete, Kammrücken 121 mit seinen Zinken 130 ist starr mit einer seismischen Masse und ebenfalls einem gemeinsamen elektrischen Potential verbunden. Der erste und zweite gemeinsame Kammrücken 120, 121 sind dem entsprechend mit einer hier nicht dargestellten Quadraturtrimmungs-Rückstellungs-Kontrolleinheit elektrisch leitend verbunden, welche die elektrische Spannung zwischen diesen beiden Kammrücken 120, 121 und deren Zinken 130 so einstellt bzw. einregelt, dass sowohl ein Quadratursignal unterdrückt werden kann, als auch eine Rückstellung einer Ausleseschwingung bzw. Ausleseauslenkung der seismischen Masse gleichzeitig und gemeinsam mit dieser kombinierten Kammstruktur erfolgen kann.

## Patentansprüche

1. Mikromechanischer Drehratensensor, der Drehraten um eine erste und eine zweite sensitive Achse (S1, S2) erfassen kann, umfassend oder aufweisend
- zumindest ein Substrat,
- zumindest eine erste und eine zweite seismische Masse (SM1, SM2), welche mittels wenigstens eines ersten Kopplungsbalkens (CB1) miteinander gekoppelt sind, wobei jeder seismischen Masse (SM1, SM2) mindestens eine Aktoreinheit (AEL, AER) zugeordnet ist, mit welcher das Auslenkungsverhalten der seismischen Masse (SM1, SM2) beeinflussbar ist,
- wobei der Drehratensensor bezüglich der Auslenkung der ersten und zweiten seismischen Masse (SM1, SM2) wenigstens eine Antriebseinheit (AEL, AER) aufweist, welche eine Antriebsschwingung aufprägt und die Auslenkungen der seismischen Massen (SM1, SM2) in Richtung einer ersten Achse (A) umfasst, wobei der Drehratensensor hinsichtlich der Antriebsschwingung eine definierte Antriebsresonanzfrequenz aufweist,
- wobei der Drehratensensor Auslenkungen der seismischen Massen (SM1, SM2) in Richtung einer zweiten Achse in Form einer ersten Ausleseschwingung aufweist, welche durch die Einwirkung und/oder Erfassung einer Drehrate um die erste sensitive Achse (S1) hervorgerufen wird, wobei der Drehratensensor hinsichtlich der ersten Ausleseschwingung eine definierte erste Ausleseresonanzfrequenz aufweist,
- wobei der Drehratensensor Auslenkungen der seismischen Massen (SM1, SM2) in Richtung einer dritten Achse in Form einer zweiten Ausleseschwingung aufweist, welche durch die Einwirkung und/oder Erfassung einer Drehrate um die zweite sensitive Achse (S2) hervorgerufen wird, wobei der Drehratensensor hinsichtlich der zweiten Ausleseschwingung eine definierte zweite Ausleseresonanzfrequenz aufweist,
- wobei die Antriebsrichtung in Richtung der ersten Achse (A) sowohl rechtwinklig zur ersten (S1), als auch zur zweiten sensitiven Achse (S2) ausgebildet ist,
**dadurch gekennzeichnet, dass**
- die erste und zweite seismische Masse (SM1, SM2) jeweils eine Basismasse und wenigstens eine zusätzliche drehratensensitive Teilmasse umfassen,
o wobei die jeweilige Basismasse bei Einwirkung einer Drehrate um die erste sensitive Achse (S1) zur ersten Ausleseschwingung angeregt wird, wobei die zusätzliche drehratensensitive Teilmasse dabei nicht in Richtung der dritten Achse angeregt wird,
o wobei diese jeweilige Teilmasse bei Einwirkung einer Drehrate um die zweite sensitive Achse (S2) zur zweiten Ausleseschwingung angeregt wird, welcher die jeweilige Basismasse nicht folgt,
und weiter **gekennzeichnet durch**,
- wenigstens einen ersten Kopplungsbalken (CB1), welcher so ausgebildet und angeordnet ist, dass er die Auslenkungen der ersten und zweiten seismischen Basismassen bezüglich der ersten Ausleseschwingung koppelt und so ausgelegt und angeordnet ist, dass er gleichgerichtete oder gleichphasige, translatorische Auslenkungen der ersten und zweiten seismischen Basismassen hinsichtlich der ersten Ausleseschwingung unterdrückt und der erste Kopplungsbalken an zumindest einem Federelement aufgehängt ist, welches so ausgebildet und eingespannt ist, dass es translatorische Auslenkungen des ersten Kopplungsbalkens verhindert, und
- zumindest einen zweiten Kopplungsbalken (CB), welcher so ausgebildet und angeordnet ist, dass er die Auslenkungen der ersten und zweiten seismischen Teilmassen bezüglich der zweiten Ausleseschwingung koppelt und so ausgelegt und angeordnet ist, dass er gleichgerichtete oder gleichphasige, translatorische Auslenkungen der ersten und zweiten seismischen Teilmassen hinsichtlich der zweiten Ausleseschwingung unterdrückt und der zweite Kopplungsbalken an zumindest einem Federelement aufgehängt ist, welches so ausgebildet und eingespannt ist, dass es translatorische Auslenkungen des zweiten Kopplungsbalkens verhindert.

2. Drehratensensor nach Anspruch 1, ferner aufweisend einen dritten Kopplungsbalken (CB2), welcher so ausgebildet und angeordnet ist, dass er die Auslenkungen der ersten und zweiten seismischen Basismassen bezüglich der ersten Ausleseschwingung koppelt und gleichgerichtete oder gleichphasige, translatorische Auslenkungen der ersten und zweiten seismischen Basismassen hinsichtlich der ersten Ausleseschwingung unterdrückt und der dritte Kopplungsbalken (CB2) an zumindest einem Federelement aufgehängt ist, welches so ausgebildet und eingespannt ist, dass es translatorische Auslenkungen des dritten Kopplungsbalkens (CB2) verhindert.

3. Drehratensensor nach Anspruch 1 oder 2, wobei die wenigstens eine Aktoreinheit (AEL, AER) eine Elektrodenstruktur oder eine Kammstruktur aufweist und so ausgelegt ist und angesteuert werden kann, dass zwischen der Elektrodenstruktur oder Kammstruktur der Aktoreinheit (AEL, AER) und der dieser zugeordneten seismischen Masse (SM1, SM2) eine elektrische Aktorspannung anliegt, welche eine elektrische Kraft bedingt, mit der das Auslenkungsverhalten der jeweiligen seismischen Massen (SM1, SM2) beeinflussbar ist.

4. Drehratensensor nach Anspruch 3, aufweisend
- zumindest eine als Quadraturtrimmungs-Aktoreinheit ausgebildete Aktoreinheit (AEL, AER), und
- eine Quadraturtrimmungs-Kontrolleinheit, welche zumindest eine elektrische Aktorspannung so einstellt, dass parasitäre Schwingungsanteile zumindest der ersten und zweiten seismischen Masse (SM1, SM2) und/oder ein Quadratursignal unterdrückt werden.

5. Drehratensensor nach Anspruch 4 wobei wenigstens eine Quadraturtrimmungs-Aktoreinheit zumindest eine als Quadraturtrimmungs-Kammstruktur ausgebildete Kammstruktur aufweist, die mindestens ein Kammstrukturbasiselementenpaar umfasst, welches zumindest aus einem ersten und einem zweiten Kammstrukturbasiselement besteht, welche jeweils einen ersten und einen zweiten Kammrücken sowie damit jeweils einstückig verbundene ein oder zwei oder mehr Zinken umfassen, wobei die Zinken dieses ersten und zweiten Kammrückens berührungslos, insbesondere alternierend, ineinandergreifen, wobei das zweite Kammstrukturbasiselement im Vergleich zum ersten Kammstrukturbasiselement im Wesentlichen so ausgebildet und angeordnet ist, dass bezüglich der geometrischen Betrachtung ausgehend vom ersten Kammstrukturbasiselement dieses zweite Kammstrukturbasiselement bezogen auf eine Normale der Substratoberfläche um 180° gedreht ist und insbesondere innerhalb der Substratebene translatorisch verschoben ist.

6. Drehratensensor nach Anspruch 3 oder 4, aufweisend
- zumindest eine als Rückstellungs-Aktoreinheit ausgebildete Aktoreinheit (AEL, AER), und
- eine Rückstellungs-Kontrolleinheit, welche zumindest eine elektrische Aktorspannung so einstellt, dass die Ausleseauslenkungen und/oder Ausleseschwingungen bezogen auf die erste und/oder zweite sensitive Achse (S1, S2) des Drehratensensors zurückgestellt werden, insbesondere ständig.

7. Drehratensensor nach einem der vorstehenden Ansprüche, aufweisend
- zumindest eine als kombinierte Quadraturtrimmungs-Rückstellungs-Aktoreinheit ausgebildete Aktoreinheit (AEL, AER), und
- eine als Quadraturtrimmungs-Rückstellungs-Kontrolleinheit ausgebildete Kontrolleinheit.

8. Drehratensensor nach Anspruch 7, wobei wenigstens eine kombinierte Quadraturtrimmungs-Rückstellungs-Aktoreinheit eine kombinierte Kammstruktur umfasst, die eine Quadraturtrimmungs-Kammstruktur umfasst,
welche mindestens ein Kammstrukturbasiselementenpaar umfasst,
welches zumindest aus einem ersten und einem zweiten Kammstrukturbasiselement besteht,
welche jeweils einen ersten und einen zweiten Kammrücken sowie damit jeweils einstückig verbundene ein oder zwei oder mehr Zinken umfassen,
wobei die Zinken dieses ersten und zweiten Kammrückens berührungslos, insbesondere alternierend, ineinandergreifen,
wobei das zweite Kammstrukturbasiselement im Vergleich zum ersten Kammstrukturbasiselement im Wesentlichen so ausgebildet und angeordnet ist, dass bezüglich der geometrischen Betrachtung ausgehend vom ersten Kammstrukturbasiselement dieses zweite Kammstrukturbasiselement bezogen auf eine Normale der Substratoberfläche um 180° gedreht ist und insbesondere innerhalb der Substratebene translatorisch verschoben ist,
wobei die kombinierte Kammstruktur zusätzlich eine als Rückstellungs-Kammstruktur ausgelegte Kammstruktur aufweist,
wobei diese Rückstellungs-Kammstruktur mindestens ein Kammstrukturbasiselementenpaar umfasst, welches zumindest aus einem ersten und einem zweiten Kammstrukturbasiselement besteht, welche jeweils einen ersten und einen zweiten Kammrücken sowie damit jeweils einstückig verbundene ein oder zwei oder mehr Zinken umfassen, wobei die Zinken dieses ersten und zweiten Kammrückens berührungslos, insbesondere alternierend, ineinandergreifen,
wobei das zweite Kammstrukturbasiselement im Vergleich zum ersten Kammstrukturbasiselement im Wesentlichen so ausgebildet und angeordnet ist, dass bezüglich der geometrischen Betrachtung ausgehend vom ersten Kammstrukturbasiselement dieses zweite Kammstrukturbasiselement an einer Geraden, parallel zu wenigstens einem der ersten oder zweiten Kammrücken gespiegelt ist und insbesondere innerhalb der Substratebene translatorisch verschoben ist.

9. Drehratensensor nach Anspruch 1, aufweisend
- zumindest eine als Resonanzfrequenzverschiebungs-Aktoreinheit ausgebildete Aktoreinheit (AEL, AER), und
- eine Resonanzfrequenzverschiebungs-Kontrolleinheit, welche zumindest eine elektrische Aktorspannung so einstellt, dass die Antriebsresonanzfrequenz und/oder die erste Ausleseresonanzfrequenz und/oder die zwei Resonanzfrequenzen, um einen definierten Wert verändert werden und/oder auf einen definierten Wert eingestellt werden.

10. Drehratensensor nach Anspruch 1 oder 9, wobei der Drehratensensor so ausgebildet ist und/oder betrieben wird, dass die Differenz der ersten Ausleseresonanzfrequenz minus der Antriebsresonanzfrequenz und die Differenz der zweiten Ausleseresonanzfrequenz minus der Antriebsresonanzfrequenz beide größer als null oder beide kleiner als null sind, wobei insbesondere der Betrag, der Differenz der ersten Ausleseresonanzfrequenz minus der zweiten Ausleseresonanzfrequenz, größer als 0,1 Hz ist.

11. Drehratensensor nach Anspruch 1 oder 9, wobei der Drehratensensor so ausgebildet ist und/oder betrieben wird, dass die Differenz der ersten Ausleseresonanzfrequenz minus der Antriebsresonanzfrequenz größer als null ist und die Differenz der zweiten Ausleseresonanzfrequenz minus der Antriebsresonanzfrequenz kleiner als null ist oder umgekehrt, wobei insbesondere der Betrag, der Differenz der ersten Ausleseresonanzfrequenz minus der zweiten Ausleseresonanzfrequenz, größer als 0,1 Hz ist.

12. Drehratensensor nach Anspruch 1 oder 9, wobei der Drehratensensor so ausgebildet ist und/oder betrieben wird, dass die Differenz der ersten Ausleseresonanzfrequenz minus der Antriebsresonanzfrequenz im Wesentlichen gleich null ist oder die Differenz der zweiten Ausleseresonanzfrequenz minus der Antriebsresonanzfrequenz im Wesentlichen gleich null ist oder dass die Differenz der ersten Ausleseresonanzfrequenz minus der Antriebsresonanzfrequenz und die Differenz der zweiten Ausleseresonanzfrequenz minus der Antriebsresonanzfrequenz jeweils im Wesentlichen gleich null sind.

13. Drehratensensor nach mindestens einem der Ansprüche 1 bis 12, umfassend zumindest eine Antriebseinheit (AEL, AER) und wenigstens eine erste und eine zweite Detektionseinheit (ADL, ADR) bezogen auf zumindest die erste, insbesondere jede, seismische Masse (SM1), wobei diese Antriebseinheit (AEL, AER) und/oder die erste und/oder die zweite Detektionseinheit (ADL, ADR) mit der seismischen Masse (SM1, SM2) über wenigstens ein Federelement verbunden ist.

14. Drehratensensor nach Anspruch 13, wobei die Antriebseinheit (AEL, AER) und/oder die erste und/oder die zweite Detektionseinheit (ADL, ADR) Teil der seismischen Masse (SM1, SM2) sind.

## Claims

1. Micromechanical rotation rate sensor, which can detect rotation rates about a first and a second sensitive axis (S1, S2) comprising or having
- at least one substrate,
- at least a first and a second seismic mass (SM1, SM2) which are coupled to one another by means of at least one first coupling beam (CB1), wherein each seismic mass (SM1, SM2) is assigned at least one actuator unit (AEL, AER) with which the deflection behavior of the seismic mass (SM1, SM2) can be influenced,
- wherein the rotation rate sensor for the deflection of the first and second seismic masses (SM1, SM2) has at least one drive unit (AEL, AER) which impresses a driving oscillation and comprises the deflections of the seismic masses (SM1, SM2) in the direction of a first axis (A), wherein the rotation rate sensor has a defined driving resonant frequency with respect to the driving oscillation,
- wherein the rotation rate sensor has deflections of the seismic masses (SM1, SM2) in the direction of a second axis in the form of a first reading out oscillation which is caused by the effect and/or sensing of a rotation rate about the first sensitive axis (S1), wherein the rotation rate sensor has a defined first reading out resonant frequency with respect to the first reading out oscillation,
- wherein the rotation rate sensor has deflections of the seismic masses (SM1, SM2) in the direction of a third axis in the form of a second reading out oscillation which is caused by the effect and/or sensing of a rotation rate about the second sensitive axis (S2), wherein the rotation rate sensor has a defined second reading out resonant frequency with respect to the second reading out oscillation,
- wherein the driving direction is embodied in the direction of the first axis (A), both at a right angle to the first axis (S1) as well as to the second axis (S2),
**characterized in that**
- the first and second seismic masses (SM1, SM2) each comprise a base mass and at least one additional rotation-rate-sensitive partial mass,
o wherein the respective base mass is excited to undergo a first reading out oscillation under the effect of a rotation rate about the first sensitive axis (S1), wherein the additional rotation-rate-sensitive partial mass is not excited in the direction of the third axis here,
o wherein this respective partial mass is excited to undergo the second reading out oscillation under the effect of a rotation rate about the second sensitive axis (S2), which second reading out oscillation is not followed by the respective base mass,
and is further **characterized by**
- at least one first coupling beam (CB1) which is embodied and arranged in such a way that it couples the deflections of the first and second seismic base masses with respect to the first reading out oscillation, and is configured and arranged in such a way that it suppresses translatory deflections of the first and second seismic base masses with respect to the first reading out oscillation which are in the same direction or in phase, and the first coupling beam is suspended from at least one spring element which is embodied and clamped in in such a way that it prevents translatory deflections of the first coupling beam, and
- at least one second coupling beam (CB) which is embodied and arranged in such a way that it couples the deflections of the first and second seismic partial masses with respect to the second reading out oscillation, and is configured and arranged in such a way that it suppresses translatory deflections of the first and second seismic partial masses with respect to the second reading out oscillation which are in the same direction or in phase, and the second coupling beam is suspended from at least one spring element which is embodied and clamped in in such a way that it prevents translatory deflections of the second coupling beam.

2. Rotation rate sensor according to Claim 1, furthermore having a third coupling beam (CB2) which is embodied and arranged in such a way that it couples the deflections of the first and second seismic base masses with respect to the first reading out oscillation and suppresses translatory deflections of the first and second seismic base masses with respect to the first reading out oscillation which are in the same direction or in phase, and the third coupling beam (CB2) is suspended from at least one spring element which is embodied and clamped in in such a way that it prevents translatory deflections of the third coupling beam (CB2).

3. Rotation rate sensor according to Claim 1 or 2, wherein the at least one actuator unit (AEL, AER) has an electrode structure or a comb structure and is configured and can be actuated in such a way that an electrical actuator voltage is present between the electrode structure or comb structure of the actuator unit (AEL, AER) and the seismic mass (SM1, SM2) assigned thereto, which actuator voltage gives rise to an electrical force with which the deflection behavior of the particular seismic masses (SM1, SM2) can be influenced.

4. Rotation rate sensor according to Claim 3, having
- at least one actuator unit (AEL, AER) which is embodied as a quadrature trimming actuator unit, and
- a quadrature trimming control unit which sets at least one electrical actuator voltage in such a way that parasitic oscillation components of at least the first and the second seismic masses (SM1, SM2) and/or a quadrature signal are suppressed.

5. Rotation rate sensor according to Claim 4, wherein at least one quadrature trimming actuator unit has at least one comb structure which is embodied as a quadrature trimming comb structure and which comprises at least one comb structure base element pair which is composed at least of a first and a second comb structure base element which each comprise a first and a second comb back and comprise one or two or more prongs which are each integrally connected thereto, wherein the prongs of these first and second comb backs engage one in the other in a contactless, in particular alternating, fashion, wherein the second comb structure base element is essentially embodied and arranged in comparison with the first comb structure base element in such a way that, with respect to the geometric consideration starting from the first comb structure base element, said second comb structure base element is rotated through 180° with respect to a normal to the surface of the substrate and in particular is shifted in a translatory fashion within the plane of the substrate.

6. Rotation rate sensor according to Claim 3 or 4, having
- at least one actuator unit (AEL, AER) which is embodied as a resetting actuator unit, and
- a resetting control unit which sets at least one electrical actuator voltage in such a way that the reading out deflections and/or reading out oscillations are reset, in particular continuously, with respect to the first and/or second sensitive axes (S1, S2).

7. Rotation rate sensor according to one of the preceding claims, having
- at least one actuator unit (AEL, AER) which is embodied as a combined quadrature trimming resetting actuator unit, and
- a control unit embodied as a quadrature trimming resetting control unit.

8. Rotation rate sensor according to Claim 7, wherein at least one combined quadrature trimming resetting actuator unit comprises a combined comb structure which comprises a quadrature trimming comb structure,
which comprises at least one comb structure base element pair,
which is composed at least of a first and a second comb structure base element,
which each comprise a first and a second comb back and one or two or more prongs which are each integrally connected thereto,
wherein the prongs of these first and second comb backs engage one in the other in a contactless, in particular alternating, fashion,
wherein the second comb structure base element is essentially embodied and arranged in comparison with the first comb structure base element in such a way that, with respect to the geometric consideration starting from the first comb structure base element, said second comb structure base element is rotated through 180° with respect to a normal to the surface of the substrate, and in particular is shifted in a translatory fashion within the plane of the substrate,
wherein the combined comb structure additionally has a comb structure which is configured as a resetting comb structure,
wherein this resetting comb structure comprises at least a comb structure base element pair which is composed at least of a first and a second comb structure base element, which each comprise a first and a second comb back and one or two or more prongs which are each integrally connected thereto, wherein the prongs of these first and second comb backs engage one in the other in a contactless, in particular alternating, fashion, wherein the second comb structure base element is essentially embodied and arranged in comparison with the first comb structure base element in such a way that, with respect to the geometric consideration starting from the first comb structure base element, this second comb structure base element is mirrored along a straight line, parallel to at least one of the first or second comb backs, and is, in particular, shifted in a translatory fashion within the plane of the substrate.

9. Rotation rate sensor according to Claim 1, having
- at least one actuator unit (AEL, AER) which is embodied as a resonant frequency shift actuator unit, and
- a resonant frequency shift control unit which sets at least one electrical actuator voltage in such a way that the driving resonant frequency and/or the first reading out resonant frequency and/or the two resonant frequencies are changed by a defined value and/or are set to a defined value.

10. Rotation rate sensor according to Claim 1 or 9, wherein the rotation rate sensor is embodied and/or operated in such a way that the difference between the first reading out resonant frequency and the driving resonant frequency and the difference between the second reading out resonant frequency and the driving resonant frequency are both greater than zero or are both smaller than zero, wherein, in particular the absolute value of the difference between the first reading out resonant frequency and the second reading out resonant frequency is greater than 0.1 Hz.

11. Rotation rate sensor according to Claim 1 or 9, wherein the rotation rate sensor is embodied and/or operated in such a way that the difference between the first reading out resonant frequency and the driving resonant frequency is greater than zero and the difference between the second reading out resonant frequency and the driving resonant frequency is smaller than zero, or vice versa, wherein, in particular, the absolute value of the difference between the first reading out resonant frequency and the second reading out resonant frequency is greater than 0.1 Hz.

12. Rotation rate sensor according to Claim 1 or 9, wherein the rotation rate sensor is embodied and/or operated in such a way that the difference between the first reading out resonant frequency and the driving resonant frequency is essentially equal to zero or the difference between the second reading out resonant frequency and the driving resonant frequency is essentially equal to zero, or that the difference between the first reading out resonant frequency and the driving resonant frequency and the difference between the second reading out resonant frequency and the driving resonant frequency are respectively essentially equal to zero.

13. Rotation rate sensor according to at least one of Claims 1 to 12, comprising at least one drive unit (AEL, AER) and at least a first and a second detection unit (ADL, ADR) with respect to at least the first seismic mass (SM1), in particular every seismic mass, wherein this drive unit (AEL, AER) and/or the first and/or the second detection unit (ADL, ADR) is connected to the seismic mass (SM1, SM2) via at least one spring element.

14. Rotation rate sensor according to Claim 13, wherein the drive unit (AEL, AER) and/or the first and/or the second detection unit (ADL, ADR) are part of the seismic mass (SM1, SM2).

## Revendications

1. Capteur micromécanique de vitesse de rotation capable de saisir des vitesses de rotation autour d'un premier et d'un deuxième axe sensible (SI, S2), le capteur comprenant ou présentant :
au moins un substrat,
au moins une première et une deuxième masse sismique (SM1, SM2) accouplées l'une à l'autre au moyen d'au moins une première barre d'accouplement (CB1), au moins une unité d'actionnement (AEL, AER) qui permet d'agir sur le comportement de déformation des masses sismiques (SM1, SM2) étant associée à chaque masse sismique (SM1, SM2),
le capteur de vitesse de rotation présentant pour la déformation de la première et de la deuxième masse sismique (SM1, SM2) au moins une unité d'entraînement (AEL, AER) qui imprime une vibration d'entraînement et qui comprend les déformations des masses sismiques (SM1, SM2) dans la direction d'un premier axe (A),
le capteur de vitesse de rotation présentant pour la vibration d'entraînement une fréquence définie de résonance d'entraînement,
le capteur de vitesse de rotation présentant dans la direction d'un deuxième axe des déformations des masses sismiques (SM1, SM2) qui ont la forme d'une première vibration de lecture provoquée par l' ajustement et/ou la détection d'une vitesse de rotation autour du premier axe sensible (S1),
le capteur de vitesse de rotation présentant pour la première vibration de lecture une première fréquence définie de résonance de lecture,
le capteur de vitesse de rotation présentant dans la direction d'un troisième axe des déformations des masses sismiques (SM1, SM2) qui ont la forme d'une deuxième vibration de lecture provoquée par l' ajustement et/ou la détection d'une vitesse de rotation autour du deuxième axe sensible (S2),
le capteur ce vitesse de rotation présentant pour la deuxième vibration de lecture une deuxième fréquence définie de résonance de lecture,
la direction d'entraînement dans la direction du premier axe (A) étant perpendiculaire au premier axe sensible (S1) et également au deuxième axe sensible (S2),
**caractérisé en ce que**
la première et la deuxième masse sismique (SM1, SM2) comprennent toutes deux une masse de base et au moins une masse partielle supplémentaire sensible à la vitesse de rotation,
**en ce que** chaque masse de base est excitée en une première vibration de lecture sous l'ajustement d'une vitesse de rotation autour du premier axe sensible (S1), la masse partielle supplémentaire sensible à la vitesse de rotation n'étant à cette occasion pas excitée dans la direction du troisième axe,
chaque masse partielle étant excitée en une deuxième vibration de lecture sous l'action d'une vitesse de rotation autour du deuxième axe sensible (S2) et ne suivant pas la masse de base respective,
et **caractérisé en outre par**
au moins une première barre d'accouplement (CB1) configurée et disposée de telle sorte qu'elle couple les déformations de la première et de la deuxième masse sismique de base par rapport à la première vibration de lecture et est conçue et disposée de telle sorte qu'elle atténue des déformations de translation de même direction ou de même phase de la première et de la deuxième masse sismique de base pour la première oscillation de lecture,
la première barre d'accouplement étant suspendue à au moins un élément élastique configuré et sollicité de manière à empêcher des déformations de translation de la première barre d'accouplement et
au moins une deuxième barre d'accouplement (CB) configurée et disposée de telle sorte qu'elle couple les déformations de la première et de la deuxième masse sismique partielle pour la deuxième oscillation de lecture, et conçue et disposée de telle sorte qu'elle atténue des déformations de translation, de même direction ou de même phase, de la première et de la deuxième masse sismique partielle pour la deuxième vibration de lecture,
la deuxième barre d'accouplement étant suspendue à au moins un élément élastique configuré et sollicité de manière à empêcher des déformations de translation de la deuxième barre d'accouplement.

2. Capteur de vitesse de rotation selon la revendication 1, présentant en outre une troisième barre d'accouplement (CB2) configurée et disposée de telle sorte qu'elle couple les déformations de la première et de la deuxième masse sismique de base pour la première vibration de lecture et qu'elle atténue les déformations de translation, de même orientation ou de même phase, de la première et de la deuxième masse sismique de base pour la première vibration de lecture, la troisième barre d'accouplement (CB2) étant suspendue à au moins un élément élastique configuré et sollicité de manière à empêcher des déformations de translation de la troisième barre d'accouplement (CB2).

3. Capteur de vitesse de rotation selon les revendications 1 ou 2, dans lequel la ou les unités d'actionnement (AEL, AER) présentent une structure d'électrode ou une structure de peigne et sont conçues et peuvent être commandées de telle sorte qu'entre la structure d'électrode ou la structure de peigne de l'unité d'actionnement (AEL, AER) et la masse sismique (SM1, SM2) qui lui est associée est appliquée une tension électrique d'actionnement qui exerce une force électrique qui permet d'agir sur le comportement de déformation de la masse sismique (SM1, SM2) concernée.

4. Capteur de vitesse de rotation selon la revendication 3, présentant au moins une unité d'actionnement (AEL, AER) configurée comme unité d'actionnement à ajustement en quadrature et une unité de contrôle d'ajustement en quadrature qui établit au moins une tension électrique d'actionnement de manière à atténuer des composantes de vibrations parasites d'au moins la première et la deuxième masse sismique (SM1, SM2) et/ou d'un signal en quadrature.

5. Capteur de vitesse de rotation selon la revendication 4, dans lequel au moins une unité d'actionnement à ajustement en quadrature présente au moins une structure de peigne configurée comme structure de peigne d'ajustement en quadrature qui comporte au moins une paire d'éléments de base de structure de peigne constituée d'au moins un premier et un deuxième élément de base de structure de peigne qui comprennent chacun un premier et un deuxième dos de peigne ainsi qu'une, deux ou plusieurs dents qui leur sont reliées d'un seul tenant, les dents de ce premier et de ce deuxième dos de peigne s'engageant l'une dans l'autre sans entrer en contact, en particulier en alternance, le deuxième élément de base de la structure de peigne étant configuré et disposé par rapport au premier élément de base de la structure de peigne essentiellement de telle sorte que géométriquement, partant du premier élément de base de la structure de peigne, ce deuxième élément de base de la structure de peigne soit tourné de 180° par rapport à la normale à la surface du substrat et en particulier soit décalé par translation à l'intérieur du plan du substrat.

6. Capteur de vitesse de rotation selon les revendications 3 ou 4, présentant au moins une unité d'actionnement (AEL, AER) configurée comme unité d'actionnement de réinitialisation et une unité de contrôle de réinitialisation qui établit au moins une tension électrique d'actionnement telle que les déformations de lecture et/ou les vibrations de lecture par rapport au premier et/ou au deuxième axe sensible (SI, S2) du capteur de vitesse de rotation soient réinitialisées, en particulier en permanence.

7. Capteur de vitesse de rotation selon l'une des revendications précédentes, présentant au moins une unité d'actionnement (AEL, AER) configurée comme unité combinée d'actionnement à ajustement en quadrature et de réinitialisation et une unité de contrôle configurée comme unité de contrôle d'ajustement en quadrature et de réinitialisation.

8. Capteur de vitesse de rotation selon la revendication 7, dans lequel au moins une unité d'actionnement combinée à ajustement en quadrature et de réinitialisation comporte une structure de peigne combinée qui comporte une structure de peigne d'ajustement en quadrature qui comporte au moins une paire d'éléments de base de structure de peigne constitués d'au moins un premier et un deuxième élément de base de structure de peigne qui comportent chacun un premier et un deuxième dos de peigne ainsi qu'une, deux ou plusieurs dents qui leur sont reliées d'un seul tenant,
les dents de ce premier et de ce deuxième dos de peigne s'engageant les unes dans les autres sans contact et en particulier en alternance,
le deuxième élément de base de la structure de peigne étant essentiellement configuré et disposé par rapport au premier élément de base de structure de peigne de telle sorte que géométriquement, partant du premier élément de base de la structure de peigne, ce deuxième élément de base de structure de peigne est tourné de 180° par rapport à la normale de la surface du substrat et en particulier est déplacé par translation à l'intérieur du plan du substrat,
la structure de peigne combinée présentant de plus une structure de peigne conçue comme structure de peigne de réinitialisation,
cette structure de peigne de réinitialisation comportant au moins une paire d'éléments de base de structure de peigne constituée d'au moins un premier et un deuxième élément de base de structure de peigne qui comprennent chacun un premier et un deuxième dos de peigne ainsi qu'une, deux ou plusieurs dents qui leur sont reliées d'un seul tenant, les dents de ce premier et de ce deuxième dos de peigne s'engageant les unes dans les autres sans contact et en particulier en alternance,
le deuxième élément de base de la structure de peigne étant conçu et disposé par rapport au premier élément de base de la structure de peigne essentiellement de telle sorte que géométriquement, partant du premier élément de base de la structure de peigne, ce deuxième élément de base de la structure de peigne est réfléchi sur une droite parallèlement au premier et/ou au deuxième dos de peigne et en particulier est déplacé par translation à l'intérieur du plan du substrat.

9. Capteur de vitesse de rotation selon la revendication 1, présentant au moins une unité d'actionnement (AEL, AER) configurée comme unité d'actionnement à décalage de fréquence de résonance et une unité de contrôle de décalage de fréquence de résonance qui établit au moins une tension électrique d'actionnement telle que la fréquence de résonance d'entraînement, la première fréquence de résonance de lecture et/ou les deux fréquences de résonance soient modifiées d'une valeur définie et/ou soient réglées à une valeur définie.

10. Capteur de vitesse de rotation selon les revendications 1 ou 9, dans lequel le capteur de vitesse de rotation est configuré et/ou utilisé de telle sorte que la différence entre la première fréquence de résonance de lecture et la fréquence de résonance et d'entraînement et la différence entre la deuxième fréquence de résonance de lecture et la fréquence de résonance d'entraînement soient toutes deux supérieures à zéro ou toutes deux inférieures à zéro, la valeur de la différence entre la première fréquence de résonance de lecture et la deuxième fréquence de résonance de lecture étant supérieure à 0,1 Hz.

11. Capteur de vitesse de rotation selon les revendications 1 ou 9, dans lequel le capteur de vitesse de rotation est configuré et/ou utilisé de telle sorte que la différence entre la première fréquence de résonance de lecture et la fréquence de résonance d'entraînement soit supérieure à zéro et que la différence entre la deuxième fréquence de résonance de lecture et la fréquence de résonance d'entraînement soit inférieure à zéro ou inversement, la valeur de la différence entre la première fréquence de résonance de lecture et la deuxième fréquence de résonance de lecture étant supérieure à 0,1 Hz.

12. Capteur de vitesse de rotation selon les revendications 1 ou 9, dans lequel le capteur de vitesse de rotation est configuré et/ou utilisé de telle sorte que la différence entre la première fréquence de résonance de lecture et la fréquence de résonance d'entraînement est essentiellement égale à zéro ou la différence entre la deuxième fréquence de résonance de lecture et la fréquence de résonance d'entraînement est essentiellement égale à zéro ou en ce que la différence entre la première fréquence de résonance de lecture et la fréquence de résonance d'entraînement et la différence entre la deuxième fréquence de résonance de lecture et la fréquence de résonance d'entraînement sont toutes deux essentiellement égales à zéro.

13. Capteur de vitesse de rotation selon au moins l'une des revendications 1 à 12, comprenant au moins une unité d'entraînement (AEL, AER) et au moins une première et une deuxième unité de détection (ADL, ADR) pour au moins la première masse sismique (SM1) et en particulier chaque masse sismique, cette unité d'entraînement (AEL, AER) et/ou la première et/ou la deuxième unité de détection (ADL, ADR) étant reliée à la masse sismique (SM1, SM2) par au moins un élément élastique.

14. Capteur de vitesse de rotation selon la revendication 13, dans lequel l'unité d'entraînement (AEL, AER), la première et/ou la deuxième unité de détection (ADL, ADR) font partie de la masse sismique (SM1, SM2).
